(19) **Europäisches Patentamt European Patent Office Office européen des brevets**

(11) **EP 4 737 133 A1**

(12) **EUROPEAN PATENT APPLICATION**

(43) Date of publication:
06.05.2026 Bulletin 2026/19

(21) Application number: 25207655.9

(22) Date of filing: 09.10.2025

(51) International Patent Classification (IPC):
**B60C 9/07** *(2006.01)* **B60C 9/17** *(2006.01)*
**B60C 11/00** *(2006.01)*

(52) Cooperative Patent Classification (CPC):
**B60C 9/07; B60C 9/17; B60C 11/005;**
B60C 2011/0025; B60C 2013/005; B60C 2013/006

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: 30.10.2024 JP 2024190964

(71) Applicant: **Sumitomo Rubber Industries, Ltd.**
**Kobe-shi, Hyogo 651-0072 (JP)**

(72) Inventors:
• **NAKAMURA, Kentaro**
**Kobe-shi, 651-0072 (JP)**
• **IMAI, Daiki**
**Kobe-shi, 651-0072 (JP)**

(74) Representative: **Manitz Finsterwald**
**Patent- und Rechtsanwaltspartnerschaft mbB**
**Martin-Greif-Straße 1**
**80336 München (DE)**

(54) **PNEUMATIC TIRE**

(57) Provided is a pneumatic tire comprising a tread, a carcass, a reinforcing layer, and a sidewall, the tread comprising a cap tread and a base tread, the carcass comprising a carcass cord, wherein a base tread rubber and a sidewall rubber are different from each other, and wherein the following inequalities (1) and (2) are satisfied:

(1) $|A_2-A_1|>0$
(2) $|70°C\ E^*_B-70°C\ E^*_s|<|A_2-A_1|\times K$

(provided that K is 0.70),
where $A_1$ represents an angle at which an extending direction of carcass cord is inclined from a tire circumferential direction at the tire center line, $A_2$ represents an angle at which an extending direction is inclined from the tire circumferential direction at the tire maximum width position, $70°C\ E^*_B$ represents a complex elastic modulus at 70°C of the base tread rubber, $70°C\ E^*_S$ represents a complex elastic modulus at 70°C of the sidewall rubber, and K represents a constant.

FIG. 2

EP 4 737 133 A1

**Description**

TECHNICAL FIELD

The present invention relates to a pneumatic tire.

BACKGROUND OF THE INVENTION

In a pneumatic tire, a carcass ply forms a skeleton. A carcass cord constituting the carcass ply is configured to distinguish between types of tires, such as a radial tire, a bias tire, and the like, depending on an extending direction thereof, and determines performances of the pneumatic tire, such as durability, rigidity, and the like. JP 2023-84469 A and WO 2021/123530 describe a pneumatic tire with carcass cords flexed by controlling the direction in which the carcass cords extend.

SUMMARY OF THE INVENTION

Such a pneumatic tire can be imparted with desired performances by controlling and changing an extending direction of carcass cords. However, there is a concern about deterioration in durability of the pneumatic tire due to strain concentrating on a part sandwiched between the tread part and the side part during running.

It is an object of the present invention to provide a pneumatic tire comprising carcass cords whose extending direction changes for suppressing deterioration in durability.

That is, the present invention relates to the following tire:

a pneumatic tire comprising a tread, a carcass, at least one reinforcing layer arranged on an outer side of the carcass in a tire radial direction, and a sidewall,

the tread comprising a cap tread including a ground-contacting surface, and a base tread on an inner side of the cap tread in a tire radial direction,

wherein the carcass is composed of at least one carcass ply comprising a plurality of carcass cords and a topping rubber covering the carcass cords,

wherein the reinforcing layer is composed of at least one reinforcing layer ply comprising a plurality of reinforcing layer cords and a topping rubber covering the reinforcing layer cords,

wherein $A_1$ represents an angle, in degrees, at which an extending direction of carcass cord of any of the carcass plies is inclined from a tire circumferential direction at a position on a tire center line, and $A_2$ represents an angle, in degrees, at which an extending direction of carcass cord of the carcass ply is inclined from the tire circumferential direction at a tire maximum width position,

wherein a rubber composition constituting the base tread and a rubber composition constituting the sidewall are composed of different rubber compositions, and

wherein $A_1$, $A_2$, 70°C $E^*_B$, 70°C $E^*$s, and K satisfy the following inequalities (1) and (2):

$$(1) \ |A_2 - A_1| > 0$$

$$(2) \ |70°C \ E^*_B - 70°C \ E^*_S| < |A_2 - A_1| \times K$$

(provided that K is 0.70)
where 70°C $E^*$s represents a complex elastic modulus, in MPa, at 70°C of the rubber composition constituting the base tread, 70°C $E^*_S$ represents a complex elastic modulus, in MPa, at 70°C of the rubber composition constituting the sidewall, and K represents a constant.

According to the present invention, deterioration in durability of a pneumatic tire comprising carcass cords whose extending direction changes can be suppressed.

BRIEF DESCRIPTION OF THE DRAWINGS

FIG. 1 is a cross-sectional view passing through a tire rotation axis of a pneumatic tire relating to one embodiment of the present invention.

FIG. 2 is one example of a developed view of carcass cords constituting a carcass ply of a pneumatic tire relating to one embodiment of the present invention, which represents, from the tire inner surface side, an angle formed between an extending direction of the carcass cords and a tire circumferential direction.

FIG. 3 is a variation of a developed view of carcass cords constituting a carcass ply of a pneumatic tire relating to one embodiment of the present invention, which represents, from the tire inner surface side, an angle formed between an extending direction of the carcass cords and a tire circumferential direction.

FIG. 4 is a schematic view representing a preferred range of an angle formed between an extending direction of a carcass cord constituting a carcass ply of a pneumatic tire relating to one embodiment of the present invention and a tire circumferential direction.

DETAILED DESCRIPTION

A pneumatic tire that is one embodiment of the present invention will be described below. The pneumatic tire of the present embodiment is a pneumatic tire comprising a tread, a carcass, at least one reinforcing layer arranged on an outer side of the carcass in a tire radial direction, and a sidewall, the tread comprising a cap tread including a ground-contacting surface, and a base tread on an inner side of the cap tread in a tire radial direction, wherein the carcass is composed of at least one carcass ply comprising a plurality of carcass cords and a topping rubber covering the carcass cords, wherein the reinforcing layer is composed of at least one reinforcing layer ply comprising a plurality of reinforcing layer cords and a topping rubber covering the reinforcing layer cords, wherein $A_1$ represents an angle, in degrees, at which an extending direction of carcass cord of any of the carcass plies is inclined from a tire circumferential direction at a position on a tire center line, and $A_2$ represents an angle, in degrees, at which an extending direction of carcass cord of the carcass ply is inclined from the tire circumferential direction at a tire maximum width position, wherein a rubber composition constituting the base tread and a rubber composition constituting the sidewall are composed of different rubber compositions, and wherein $A_1$, $A_2$, 70°C $E^*_B$, 70°C $E^*s$, and K satisfy the following inequalities (1) and (2):

$$(1) \ |A_2 - A_1| > 0$$

$$(2) \ |70°C \ E^*_B - 70°C \ E^*_S| < |A_2 - A_1| \times K$$

(provided that K is 0.70)
where 70°C $E^*s$ represents a complex elastic modulus, in MPa, at 70°C of the rubber composition constituting the base tread, 70°C $E^*_S$ represents a complex elastic modulus, in MPa, at 70°C of the rubber composition constituting the sidewall, and K represents a constant.

Although it is not intended to be bound by a theory, in the present invention, the following can be considered as a mechanism by which deterioration of durability is suppressed. That is, although strain is concentrated during running on a portion sandwiched between a tread part and a side part, strain at an interface between the both parts can be dispersed by reducing a difference in complex elastic modulus between the rubber composition constituting the base tread and the rubber composition constituting the sidewall, as the base tread and the sidewall are adjacent to the sandwiched portion. Moreover, the extending direction of carcass cord, and the complex elastic modulus of the rubber composition constituting the base tread and the complex elastic modulus of the rubber composition constituting the sidewall, are adjusted so as to satisfy predetermined relational inequalities. It is considered that, with cooperation of these features, deterioration in durability of the tire is suppressed.

In the above-described inequality (2), the constant K is preferably 0.50, more preferably 0.30.

This is because the inequality (2) is satisfied under a stricter condition.

It is preferable that the rubber composition constituting the base tread comprises a rubber component, and that the rubber component comprises an isoprene-based rubber.

When the rubber component comprises an isoprene-based rubber with a high strength, it is considered that durability of the tire is improved.

It is preferable that the rubber composition constituting the base tread comprises a rubber component, and that the rubber component comprises a styrene-butadiene rubber or a butadiene rubber.

When the rubber composition comprises a styrene-butadiene rubber, an effect of converting strain into heat is increased, and it is considered that a damage caused by strain to a rubber member can be mitigated. Moreover, when the rubber composition comprises a butadiene rubber, a complex elastic modulus is reduced, and it is considered that concentration of strain can be reduced.

It is preferable that the rubber composition constituting the sidewall comprises a rubber component, and that the rubber component comprises an isoprene-based rubber.

When the rubber component comprises an isoprene-based rubber with a high strength, it is considered that durability of the tire is improved.

The rubber composition constituting the sidewall preferably comprises resin.

When the rubber composition comprises resin, flexibility is increased, and it is considered that concentration of strain can be suppressed. Also, adhesiveness between rubbers is increased, and it is considered that processability during tire molding can be enhanced.

$A_1$ and $A_{RF}$ are preferably different, where, in at least any of the reinforcing layer plies, $A_{RF}$ represents an angle, in degrees, at which an extending direction of reinforcing layer cord of the reinforcing layer ply is inclined from a tire circumferential direction.

It is considered that twisting of the carcass ply arranged by controlling the extending direction thereof on an inner side of a tread in a tire radial direction can be mitigated when $A_1$ and $A_{RF}$ are different from each other.

It is preferable that the inclination direction of $A_{RF}$ from the tire circumferential direction is opposite to the inclination direction of $A_1$ from the tire circumferential direction.

It is considered that twisting of the carcass ply arranged by controlling the extending direction thereof on the inner side of the tread in the tire radial direction can be cancelled when the inclination directions of $A_1$ and $A_{RF}$ are opposite to each other.

The reinforcing layer comprising the reinforcing layer ply in which the angle at which the extending direction of reinforcing layer cord is inclined from the tire circumferential direction is $A_{RF}$ (°) is preferably composed of one reinforcing layer ply.

It is considered that the weight of the tire can be reduced by decreasing the number of reinforcing layer plies.

The reinforcing layer ply in which the angle at which the extending direction of reinforcing layer cord is inclined from the tire circumferential direction is $A_{RF}$ (°) is preferably a belt ply.

It is considered that the use of the belt ply makes it possible to minimize the number of reinforcing layer plies.

The at least one reinforcing layer preferably consists of a belt.

It is considered that the weight of the tire can be reduced by decreasing the types of reinforcing layer plies.

The carcass is preferably composed of one carcass ply.

It is considered that the weight of the tire can be reduced by decreasing the number of carcass plies.

$A_2$ is preferably in a range of +70° or higher and +90° or lower, or in a range of -70° or lower and higher than -90°.

When $A_2$ is within the above-described ranges, it is considered that the effects of the present invention can be improved.

The complex elastic modulus, 70°C $E^*_B$, at 70°C of the rubber composition constituting the base tread is preferably 7.0 or less.

When the complex elastic modulus of the rubber composition constituting the base tread is set as described above, the rubber becomes flexible, and it is considered that concentration of strain can be reduced.

The complex elastic modulus, 70°C $E^*_S$, at 70°C of the rubber composition constituting the sidewall is preferably 6.5 or less.

When the complex elastic modulus of the rubber composition constituting the sidewall is set as described above, the rubber becomes flexible, and it is considered that concentration of strain can be reduced.


<Definitions>

A "standardized state" is a state where a tire is rim-assembled on a standardized rim and air under a standardized internal pressure is filled, and no load is applied. Unless otherwise specified, a tire in the standardized state is used.

A "dimension of each part of a tire" is, for one appearing on the outer surface of the tire, a value specified in a standardized condition unless otherwise specified, while it is, for one present inside the tire or on a tire cutting surface, a value specified in a condition where, for example, the tire is cut on a plane including a tire rotation axis and the cut tire piece is held to a rim width of a standardized rim.

A "standardized rim" is a rim in a standard system including a standard on which the tire is based, defined by the standard for each tire. For example, the "standardized rim" refers to a standard rim of an applicable size described in "JATMA YEAR BOOK" in JATMA (The Japan Automobile Tyre Manufacturers Association, Inc.), "Measuring Rim" described in "STANDARDS MANUAL" in ETRTO (The European Tyre and Rim Technical Organisation), or "Design Rim" described in "YEAR BOOK" in TRA (The Tire and Rim Association, Inc.), to which references are made in this order, and if there is an applicable size at the time of the reference, the rim conforms to its standard. Besides, in a case of tires that are not defined by the standard, the standardized rim shall refer to one which can be assembled to the tire and whose width is narrowest among rims having the smallest diameter that can maintain an internal pressure (i.e., do not cause air leakage between the rim and the tire).

A "standardized internal pressure" is an air pressure in a standard system including a standard on which the tire is based, defined by the standard for each tire, for example, it refers to a "MAXIMUM AIR PRESSURE" in JATMA, "INFLATION PRESSURE" in ETRTO, or a maximum value described in Table "TIRE LOAD LIMITS AT VARIOUS COLD INFLATION PRESSURES" in TRA, to which references are made in this order as in the case of the standardized rim, and if there is an applicable size at the time of the reference, the standardized internal pressure conforms to its standard. Besides, in a case of tires that are not defined by the standard, the standardized internal pressure shall refer to a standardized internal pressure (250 KPa or more) of another tire size (specified in the standard) for which the standardized rim is described as a standard rim, and when a plurality of standardized internal pressures of 250 KPa or more are described, it shall refer to the minimum value among them.

A "standardized load in kg" is a load in a standard system including a standard on which the tire is based, defined by the standard for each tire, for example, a "MAXIMUM LOAD CAPACITY" in JATMA, a "LOAD CAPACITY" in ETRTO, or a maximum value described in Table "TIRE LOAD LIMITS AT VARIOUS COLD INFLATION PRESSURES" in TRA, to which references are made in this order as in cases of a standardized rim and a standardized internal pressure, and if there is an applicable size at the time of the reference, the load conforms to its standard. Then, in a case of tires that are not defined by the standard, the maximum load capacity WL calculated separately is defined as a standardized load.

The "maximum load capacity WL in kg" is calculated by the following equations. Wherein "V" is a virtual volume, in $mm^3$, of a tire, "Dt" is a tire outer diameter, in mm, in a standardized state, "Ht" is a tire cross-sectional height, in mm, in a tire radial direction on a cross section of the tire in a plane including a tire rotation axis, and "Wt" is a tire cross-sectional width, in mm, in a standardized state. When R represents a rim diameter of the tire, Ht can be calculated by (Dt-R)/2. Wt is a value obtained by excluding, if any, patterns or characters on the side surface of the tire. Besides, the "maximum load capacity" has the same meaning as the above-described standardized load.

$$W_L = 0.000011 \times V + 175$$

$$V = \{(Dt/2)^2 - (Dt/2 - Ht)^2\} \times \pi \times Wt$$

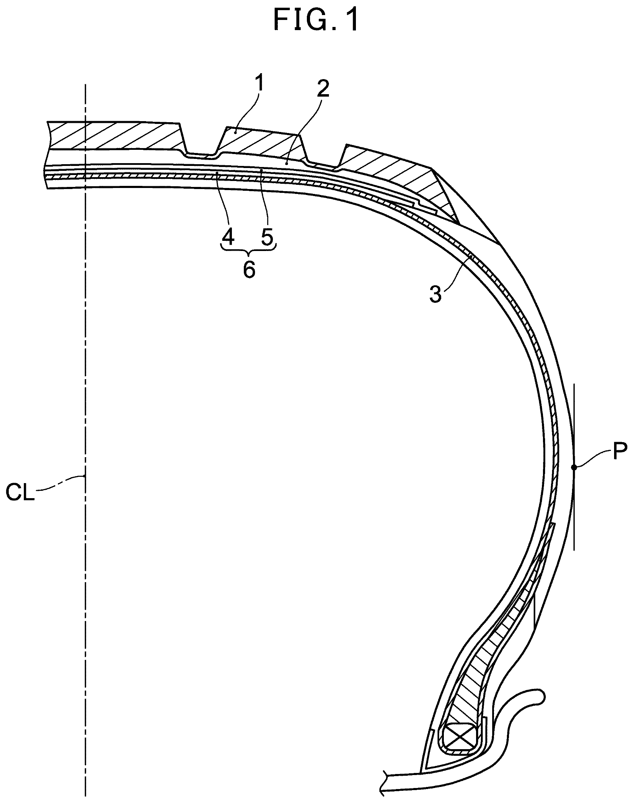

A "tread part" is a part of a tire partitioned off by a normal line of a tire inner surface passing through each tread grounding end. A "bead part" is a part of the tire that comes into contact with a rim, maintains an internal pressure, and transmits driving and braking. A "side part" is a part of the tire on the bead part side among parts of the tire that connect the tread part and the bead part. Each part is shown in FIG. 1.

A "tread grounding end" refers to the outermost end in a tire width direction with which the tire comes into contact when it is pressed against the ground. The tread grounding end can be determined by mounting the tire on a standardized rim, filling a standardized internal pressure, and leaving the tire to stand at 25°C for 24 hours, followed by painting a tread surface of the tire with ink, applying a standardized load (load equal to the maximum load capacity) on the tire to press the tire vertically against a cardboard (a camber angle at 0°), and transferring the ink.

A "tread ground-contacting width" refers to a distance along a tread surface from one tread grounding end to the other tread grounding end.

A "carcass" is a member that forms a tire skeleton and is composed of at least one carcass ply comprising a plurality of carcass cords and a topping rubber covering the carcass cords. An internal member is present on the inner side of the carcass in the tire radial direction. Examples of the internal member include an inner liner, an insulation, and the like.

A "tire maximum width position" refers to the maximum width position within a cross section in a tire width direction measured in a standardized state.

An "R1 region" refers to a region in which an inclination angle of a carcass cord, which is $A_1$ on a tire center line, falls within a predetermined range of variation. The permissible range of variation of the inclination angle of the carcass cord in the R1 region is a range of -10% or more and 5% or less with respect to an absolute value of $A_1$ ($|A_1|$). The R1 region straddles the tire center line and does not include a maximum tire width position that is a measurement position of $A_2$.

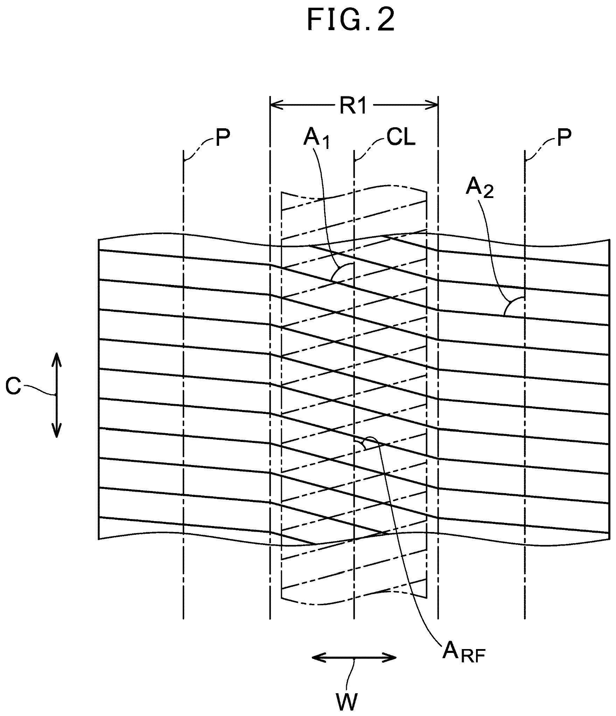

"$A_1$" is an angle, in degrees, at which an extending direction of carcass cord is inclined from a tire circumferential direction at a position on the tire center line, and is expressed in a range of higher than -90° and +90° or lower, where the angle is regarded as plus (+) when the extending direction of carcass cord is inclined downward to the right with respect to a tire circumferential direction and the angle is regarded as minus (-) when the extending direction of carcass cord is inclined upward to the right with respect to a tire circumferential direction, when the tire is viewed from the inner-surface side. When there are a plurality of corresponding carcass plies, $A_1$ is preferably measured for a carcass ply on the outermost side in a tire radial direction. FIG. 2 shows the case where $A_1$ is plus (+). Besides, the value is a plus value, the symbol of "+" may be omitted.

"$A_2$" is an angle, in degrees, at which an extending direction of carcass cord is inclined from a tire circumferential direction at a tire maximum width position, and is expressed in a range of higher than -90° and +90° or lower, where the angle is regarded as plus (+) when the extending direction of carcass cord is inclined downward to the right with respect to a tire circumferential direction and the angle is regarded as minus (-) when the extending direction of carcass cord is inclined upward to the right with respect to a tire circumferential direction, when the tire is viewed from the inner-surface side. FIG. 2 shows the case where $A_2$ is plus (+). Besides, the value is a plus value, the symbol of "+" may be omitted. In a case where there are a plurality of corresponding carcass plies, $A_2$ is preferably measured for a carcass ply on the outermost side in the tire radial direction.

A carcass ply for which $A_2$ is to be measured is present so that the carcass ply extends from a tire center line toward both sides in a tire width direction, and the carcass ply shall extend so that at least one side thereof is beyond a tire maximum width position. At this time, the other side of the carcass ply may or may not be beyond the tire maximum width position. In a case where a main body part and a turn-up part of the carcass ply are present at the tire maximum width position, $A_2$ is measured for a carcass cord of the main body part. Moreover, there is a case where no turn-up part of the carcass ply is present at the tire maximum width position or where one of the turn-up parts of the carcass ply is present only on one side in the tire width direction. Also in these cases, $A_2$ is measured for a carcass cord of the main body part.

For the main body part and the turn-up parts of the carcass ply, for example, the following cases are assumed:

a: a case where the turn-up parts are present on both sides of the main body part in the tire width direction,
b: a case where the main body part of the carcass ply extends to the tire maximum width position on both sides in the tire width direction, and only one turn-up part is present on one side of the main body part in the tire width direction (no turn-up part is present on the other side of the main body part in the tire width direction),
c: a case where the main body part of the carcass ply extends only to the maximum width position on one side in the tire width direction, and only one turn-up part is present on the one side of the main body part in the tire width direction (the main body part does not extend to the maximum width position on the other side in the tire width direction, and no turn-up part is present on the other side in the tire width direction),
d: a case where the main body part of the carcass ply extends to the tire maximum width position on both sides in the tire width direction, and no turn-up parts are present on any of both sides of the main body part in the tire width direction, and
e: a case where the main body part of the carcass ply extends only to the maximum width position on one side in the tire width direction, and no turn-up parts are present on any of both sides of the main body part in the tire width direction.

In each of the above-described cases of a to e, $A_2$ is measured as follows, respectively. That is, in the cases of a, b, and d, $A_2$ is measured at two positions of the main body part. At least one of these values of $A_2$ has only to satisfy a predetermined requirement. On the other hand, in the cases of c and e, $A_2$ is measured at one position of the main body part. $A_2$ needs to satisfy a predetermined requirement.

A "carcass cord whose extending direction changes" is a carcass cord that satisfies the above-described inequality (1), that is, $|A_2-A_1|>0$.

A "reinforcing layer" is a member that is provided on an outer side in a tire radial direction with respect to a carcass and on an inner side in the tire radial direction with respect to a tread and that is responsible for a hooping effect of suppressing the tire from bulging out due to internal pressure or rotation, as well as for receiving and mitigating input from a road surface. The reinforcing layer is composed of at least one reinforcing layer ply comprising a plurality of reinforcing layer cords and a topping rubber covering the reinforcing layer cords. In the present specification, among the at least one reinforcing layer ply, a reinforcing layer ply arranged on the innermost side in a tire radial direction refers to an inner-side reinforcing layer ply. Specific examples of the reinforcing layer include a belt, a band, and the like.

A "belt" is one of reinforcing layers, and is composed of at least one belt ply. A plurality of belt cords constituting the belt ply are arranged substantially parallel to each other, and an extending direction of belt cord is inclined at 10° or higher with respect to a tire circumferential direction. The belt comprises a joint part on the tire circumference of the tire. Here, the wording "substantially parallel" means that an angular difference between an extending direction of each belt cord and a tire circumferential direction is within ±3°.

A "band" is one of reinforcing layers, and is composed of at least one band ply. A band cord constituting the band ply is arranged in a spirally wound state in a tire circumferential direction, and an extending direction of band cord is inclined at 5° or lower with respect to the tire circumferential direction. The band has no joint part on the tire circumference. The band includes a full band covering the entire tread and an edge band covering only an edge part of a tread.

"$A_{RF}$" is an angle, in degrees, at which an extending direction of reinforcing layer cord of a reinforcing layer ply is inclined from a tire circumferential direction, and is expressed in a range of higher than -90° and +90° or lower, where the angle is regarded as plus (+) when the extending direction of carcass cord is inclined downward to the right with respect to a tire circumferential direction and the angle is regarded as minus (-) when the extending direction of carcass cord is inclined upward to the right, when the tire is viewed from the inner-surface side. FIG. 2 shows the case where $A_{RF}$ is minus (-). Besides, the value is a plus value, the symbol of "+" may be omitted.

<Measuring method>

"70°C E*s" is a complex elastic modulus at 70°C of a rubber composition constituting a base tread, which is measured using a dynamic viscoelasticity measuring device (e.g., EPLEXOR series manufactured by gabo Systemtechnik GmbH) under a condition of a temperature at 70°C, a frequency of 10Hz, an initial strain of 10%, a dynamic strain of $\pm 1\%$, and an extension mode. A sample used for the measurement is a vulcanized rubber composition with 20 mm in length $\times$ 4 mm in width $\times$ 1 mm in thickness. When preparing a sample obtained by cutting out a tire, a length direction of the sample is configured to coincide with a tire circumferential direction and a thickness direction of the sample is configured to coincide with a tire radial direction, and the sample is prepared with being as close to the above-described predetermined dimensions as possible.

"70°C $E^*_S$" is a complex elastic modulus at 70°C of a rubber composition constituting a sidewall, which is measured using a dynamic viscoelasticity measuring device (e.g., EPLEXOR series manufactured by gabo Systemtechnik GmbH) under a condition of a temperature at 70°C, a frequency of 10Hz, an initial strain of 10%, a dynamic strain of $\pm 1\%$, and an extension mode. A sample used for the measurement is a vulcanized rubber composition with 20 mm in length $\times$ 4 mm in width $\times$ 1 mm in thickness. When preparing a sample obtained by cutting out a tire, a length direction of the sample is configured to coincide with a tangent line to a tire circumferential direction and a thickness direction of the sample is configured to coincide with a tire width direction, and the sample is prepared with being as close to the above-described predetermined dimensions as possible.

A "glass transition temperature (Tg) of a rubber composition" is a temperature corresponding to a maximum value (tan $\delta$ peak temperature) within a range of -60°C or higher and 40°C or lower in a temperature distribution curve of tan $\delta$ obtained by measurement, under a condition of a frequency of 10 Hz, an initial strain of 10%, a dynamic strain of $\pm 0.5\%$, and a temperature rising rate at 2°C/min, using a dynamic viscoelasticity measuring device (e.g., EPLEXOR series manufactured by gabo Systemtechnik GmbH). Besides, in the measurement in the range of -60 to 40°C, if the tan $\delta$ value continues to gradually increase or decrease as the temperature rises, the glass transition temperature of the rubber composition shall be 40°C or -60°C, respectively. Moreover, in the range of -60°C or higher and 40°C or lower, if there are two or more points indicating the maximum value, a point having the lowest temperature shall be a glass transition temperature.

"$A_1$, $A_2$" are each determined as an average of angles measured on four different cords. The four cords are preferably selected as any four cords, and more preferably, the four cords are equally spaced apart at approximately 90° intervals in a tire circumferential direction. In this case, it is not necessary that subjects of measurement for $A_1$ and $A_2$ are the same code, but it is further preferable that the subjects of measurement for $A_1$ and $A_2$ are the same code.

"$A_{RF}$" is determined as an average of angles measured on four different cords. The four cords are preferably selected as any four cords, and more preferably, the four cords are equally spaced apart at approximately 90° intervals in a tire circumferential direction.

A "glass transition temperature of a rubber component" is a static glass transition temperature of each rubber component calculated by a differential scanning calorimeter (for example, Q200 manufactured by TA Instruments Japan Inc.).

A "styrene content" is calculated by pyrolysis gas chromatography or NMR measurement ($^1$H-NMR or $^{13}$C-NMR). Unlike physical property values such as a complex elastic modulus (E*) and the like, an amount of a component such as the "styrene content" has a true value that is independent of a measuring method, so it is preferable to use a measuring method with as high accuracy as possible. Besides, in the present specification, "pyrolysis gas chromatography" refers to a method of heating a sample in a pyrolyzer, separating individual components contained in gas phase generated by this heating using a separation column, and analyzing each separated component.

A "vinyl content (1,2-bond butadiene unit amount)" is calculated by pyrolysis gas chromatography or NMR measurement ($^1$H-NMR or $^{13}$C-NMR). Similarly with the "styrene content", the "vinyl content" has a true value that is independent of a measuring method, so it is preferable to use a measuring method with as high accuracy as possible.

A "cis content (cis-1,4-bond butadiene unit amount)" is a value measured by infrared absorption spectrometry or NMR measurement ($^1$H-NMR or $^{13}$C-NMR) according to JIS K 6239-2:2017 and is applied to, for example, a rubber component having a repeating unit derived from butadiene such as a BR and the like. Similarly with the "styrene content", the "cis content" has a true value that is independent of a measuring method, so it is preferable to use a measuring method with as high accuracy as possible.

A "weight-average molecular weight (Mw)" can be calculated in terms of a standard polystyrene based on measurement values obtained by a gel permeation chromatography (GPC) (e.g., GPC-8000 Series manufactured by Tosoh Corporation, detector: differential refractometer, column: TSKgel (Registered Trademark) SuperMultiporeHZ-M manufactured by Tosoh Corporation). For example, it is applied to an SBR, a BR, a plasticizing agent, and the like.

A "nitrogen adsorption specific surface area ($N_2SA$) of carbon black" is measured according to JIS K 6217-2:2017.

A "nitrogen adsorption specific surface area ($N_2SA$) of silica" is measured by the BET method according to ASTM D3037-93.

An "average primary particle size" is a value obtained by photographing particles using a transmission or scanning electron microscope and calculating an arithmetic average of particle sizes of 400 particles. If a shape of the particle is spherical, a diameter of the sphere is defined as a particle size, and if the shape is other than spherical, a circle equivalent diameter (positive square root of $\{4 \times (\text{area of particle})/\pi\}$) is calculated from the microscope image to be defined as a particle size.

A "plasticizing agent" is a material that imparts plasticity to a rubber component, which is a component extracted from a rubber composition using acetone. Moreover, the plasticizing agent includes a plasticizing agent that is liquid (in a liquid state) at 25°C and a plasticizing agent that is solid at 25°C. However, it shall not comprise wax and stearic acid commonly used in the tire industry.

A "content of a plasticizing agent" also includes an amount of a plasticizing agent in a rubber component extended by the plasticizing agent.

A "softening point of resin" is a temperature at which a sphere drops when the softening point specified in JIS K 6220-1:2015 7.7 is measured with a ring and ball softening point measuring device.

The embodiment will be described in further detail below. However, the following descriptions are illustrative for explaining the present invention, and the present invention is not limited thereto. The embodiment will be described with reference to the drawings as appropriate, but the drawings are merely illustrative.

<Tire>

The tire in FIG. 1 comprises a cap tread 1, a base tread 2, a carcass 3, a belt 4, and a band 5. The belt 4 and the band 5 constitute a reinforcing layer 6.

The carcass 3 is composed of one carcass ply comprising a plurality of carcass cords and a topping rubber covering the carcass cords. The belt 4 is composed of one belt ply comprising a plurality of belt cords and a topping rubber covering the belt cords. The band 5 is composed of one band ply comprising a band cord helically wound in a tire circumferential direction and a topping rubber that covers the band cords. The tire maximum width position is denoted by P.

In the tire in FIG. 1, the carcass 3 may be composed of a plurality of carcass plies, but from the viewpoint of reducing the weight of the tire, it is preferable that the carcass 3 is composed of a smaller number of carcass plies, and it is more preferable that the carcass 3 is composed of one carcass ply. The belt 4 may be composed of a plurality of belt plies, but from the viewpoint of reducing the weight of the tire, it is preferable that the belt 4 is composed of a smaller number of belt plies, and it is more preferable that the belt 4 is composed of one belt ply. The band 5 may be composed of a plurality of band plies, but from the viewpoint of reducing the weight of the tire, it is preferable that the band 5 is composed of a smaller number of band plies, and it is more preferable that the band 5 is composed of one band ply. The reinforcing layer 6 may be composed of a plurality of reinforcing layer plies, but from the viewpoint of reducing the weight of the tire, it is preferable that the reinforcing layer 6 is composed of a smaller number of reinforcing layer plies, and it is preferable that the reinforcing layer 6 is composed of one reinforcing layer ply.

In the tire of the present embodiment, a reinforcing layer may be one comprising both a belt and a band, or may be one consisting of a belt or a band. In particular, the reinforcing layer is preferably one consisting of a belt.

FIG. 2 shows a developed view of carcass cords constituting a carcass ply, from the tire inner surface side, which shows an angle formed between an extending direction of carcass cord and a tire circumferential direction. In FIG. 2, the horizontal direction W represents a tire width direction, the vertical direction C represents a tire circumferential direction, and the direction perpendicular to the paper surface indicates a tire radial direction. The carcass ply comprises a plurality of carcass cords and a topping rubber covering the carcass cords, and in FIG. 2, the plurality of carcass cords are indicated by the solid lines. An angle at which an extending direction of carcass cord is inclined from a tire circumferential direction in FIG 2 is $A_2$ at one tire maximum width position P, becomes $A_1$ at a position on a tire center line after flexion of carcass cord, and then becomes $A_2$ at the other tire maximum width position P after further flexion of carcass cord in the opposite direction. Besides, indicated by the two-dot chain line is an inner-side reinforcing layer ply comprising a plurality of reinforcing layer cords and a topping rubber covering the reinforcing layer cords, specifically a belt ply.

An angle, in degrees, at which an extending direction of carcass cord is inclined from a tire circumferential direction at a position on a tire center line is denoted by $A_1$, and an angle, in degrees, at which an extending direction is inclined from the tire circumferential direction at a tire maximum width position is denoted by $A_2$. Both $A_1$ and $A_2$ are inclined downward to the right with respect to the tire circumferential direction when viewed from the tire inner surface side, and therefore, they have a plus (+) value. On the other hand, an angle at which an extending direction of reinforcing layer cord is inclined from the tire circumferential direction is denoted by $A_{RF}$, in degrees. The extending direction of reinforcing layer cord is inclined upward to the right with respect to the tire circumferential direction when viewed from the tire inner surface side, and therefore $A_{RF}$ has a minus (-) value.

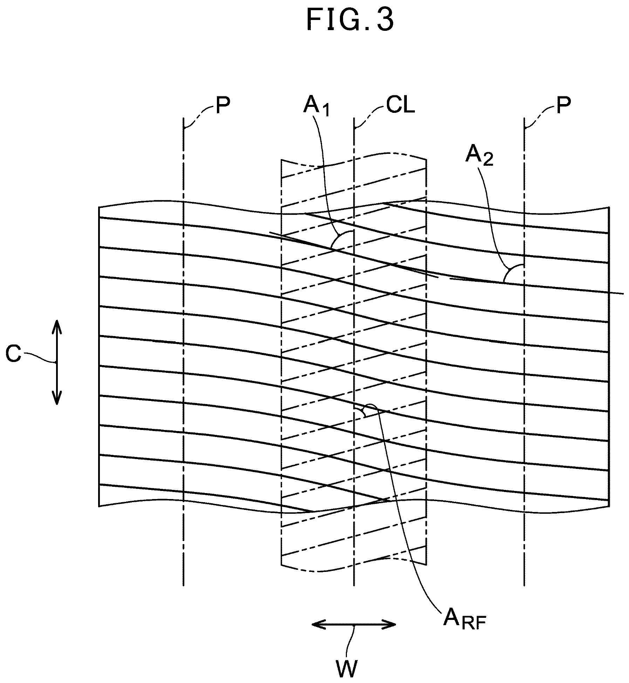

FIG. 3 is a developed view of carcass cords constituting a carcass ply, from the tire inner surface side, which represents an angle formed between an extending direction of carcass cord and a tire circumferential direction, and FIG 3 is a variation of FIG. 2. FIG. 3 shows an aspect from one tire maximum width position to the other tire maximum width position, and an extending direction of carcass cord starts at an angle $A_2$ inclined from a tire circumferential direction at one of the tire maximum width positions P, changes smoothly on its way, and ends at an angle $A_2$ inclined from the tire circumferential direction at the other tire maximum width position P. In FIG. 3, an angle, in degrees, at which a tangent line of carcass cord is inclined from a tire circumferential direction at a position on the tire center line CL is denoted by $A_1$, and an angle, in degrees, at which a tangent line of carcass cord is inclined from the tire circumferential direction at the tire maximum width position P is denoted by $A_2$. The other configurations are the same as in FIG. 2.

In the tire of the present embodiment, a width of the R1 region, where the inclination angle of the carcass cord, that is $A_1$, on the tire center line is within a predetermined range of variation, is preferably 30% or more of the tread ground-contacting width. The width of the R1 region is more preferably 50% or more, further preferably 70% or more, further preferably 90% or more of the tread ground-contacting width. On the other hand, the width of the R1 region is preferably 100% or less of the tread ground-contacting width.

Moreover, in the tire of the present embodiment, $A_1$ and $A_2$ are angles of carcass cord of any of the carcass plies. $A_1$ is preferably an angle, in degrees, at which an extending direction of carcass cord of a carcass ply on the outermost side in the tire radial direction among the carcass plies is inclined from a tire circumferential direction at a position on the tire center line. Moreover, $A_2$ is preferably an angle, in degrees, at which an extending direction of carcass cord of the carcass ply on the outermost side in the tire radial direction among the carcass plies is inclined from the tire circumferential direction at a tire maximum width position.

That is, the pneumatic tire of the present embodiment preferably comprises a tread, a carcass, at least one reinforcing layer arranged on an outer side of the carcass in a tire radial direction, and a sidewall, the tread comprising a cap tread including a ground-contacting surface, and a base tread on an inner side of the cap tread in a tire radial direction, wherein the carcass is composed of at least one carcass ply comprising a plurality of carcass cords and a topping rubber covering the carcass cords, wherein the reinforcing layer is composed of at least one reinforcing layer ply comprising a plurality of reinforcing layer cords and a topping rubber covering the reinforcing layer cords, wherein $A_1$ represents an angle, in degrees, at which an extending direction of carcass cord of a carcass ply on the outermost side in the tire radial direction among the carcass plies is inclined from a tire circumferential direction at a position on a tire center line, and $A_2$ represents an angle, in degrees, at which an extending direction of carcass cord of the carcass ply is inclined from the tire circumferential direction at a tire maximum width position, wherein a rubber composition constituting the base tread and a rubber composition constituting the sidewall are composed of different rubber compositions, and wherein $A_1$, $A_2$, 70°C $E^*_B$, 70°C $E^*_S$, and K satisfy the following inequalities (1) and (2), where 70°C E*s represents a complex elastic modulus, in MPa, at 70°C of the rubber composition constituting the base tread, 70°C $E^*_S$ represents a complex elastic modulus, in MPa, at 70°C of the rubber composition constituting the sidewall, and K represents a constant.

Materials of the carcass cord and the reinforcing layer cord are not particularly limited, examples of which include, for example, a metal cord (such as a steel cord and the like), an organic fiber cord, an inorganic fiber cord (excluding a metal cord), and the like.

The metal cord may be a single monofilament cord (i.e., a cord having a $1 \times 1$ structure and consisting of one filament) or may have a plurality of filaments. When one metal cord has a plurality of filaments, the metal cord preferably has a twist structure in which these filaments are twisted together along the longitudinal direction. The twist structure is not particularly limited, and can be, for example, a single-twist metal cord having a $1 \times N$ structure or a layer-twist metal cord having an N+M structure.

A filament constituting the organic fiber cord is not particularly limited, examples of which include, for example, a polyester fiber, a nylon fiber, an aramid fiber, a polyketone fiber, a polyparaphenylene acrylate fiber, a polyacrylate fiber, a rayon fiber, a cellulose fiber, a carbon fiber, and the like. Among them, a polyester fiber is preferable. These organic fibers may be formed of a synthetic fiber, a biomass-derived fiber, a recycled/regenerated fiber, and the like. These organic fibers may be used alone or two or more thereof may be used in combination. Besides, the organic fiber cord can be one formed by twisting together a plurality of yarns obtained by twisting a plurality of filaments together.

Examples of inorganic fiber cords other than metal cords include a carbon fiber cord, a glass fiber cord, and the like.

(Inequality (1))

In the present embodiment, a value on the right side in the inequality (1) is a value greater than 0. That is, in the tire of the present embodiment, $A_1$ and $A_2$ are at least different from each other, and therefore $|A_2-A_1|>0$ shall be satisfied. In the present embodiment, the value of $|A_2-A_1|$ is not particularly limited as long as it is higher than 0, but the value is usually lower than 60°, and may be lower than 50°, lower than 40°, lower than 30°, lower than 20°, or 10° or lower. On the other hand, the value is preferably higher than 1°, more preferably higher than 3°, further preferably 5° or higher.

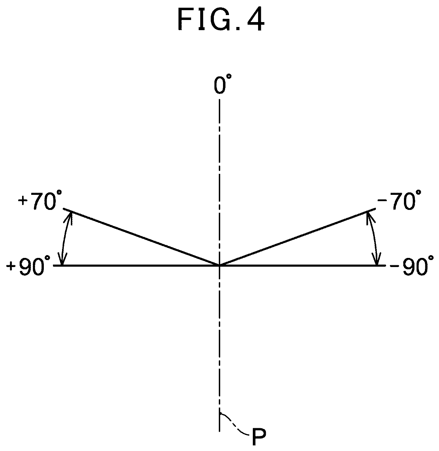

Moreover, $A_2$ is preferably in a range of +70° or higher and +90° or lower, or in a range of -70° or lower and higher than -90°. FIG. 4 shows a schematic view representing, from the tire inner surface side, a preferred range of an angle formed of an extending direction of carcass cord constituting a carcass ply with a tire circumferential direction. $A_2$ being +70° or higher and +90° or lower, or -70° or lower and higher than -90°, means that the extending direction of carcass cord is within a range of the arched double arrow in FIG. 4. When $A_2$ is within the above-described ranges, it is considered that the effects of the present invention can be improved. For $A_2$ of +70° or higher and +90° or lower, a lower limit is more preferably 75° or higher, further preferably 80° or higher, while an upper limit is more preferably 85° or lower. For $A_2$ of - 70° or lower and higher than -90°, an upper limit is more preferably -75° or lower, further preferably -80° or lower, while a lower limit is more preferably - 85° or higher.

(Inequality (2))

In the inequality (2), the value of K is preferably 0.60, more preferably 0.50, further preferably 0.40, further preferably 0.30, further preferably 0.20, further preferably 0.10. On the other hand, there is no particular lower limit to the value of K, but it is usually about 0.03, about 0.04, or about 0.05.

(70°C $E^*_B$)

A value of 70°C $E^*_B$ that is a complex elastic modulus at 70°C of the rubber composition constituting the base tread is, but not particularly limited to, preferably less than 15.0, more preferably less than 13.0, further preferably less than 11.0, further preferably 10.0 or less, further preferably 7.0 or less, further preferably 6.5 or less. On the other hand, the value may be, for example, greater than 2.0, preferably greater than 2.5, more preferably greater than 3.0, more preferably 3.5 or more, further preferably 4.0 or more.

(70°C $E^*_S$)

A value of 70°C $E^*_S$ that is a complex elastic modulus at 70°C of the rubber composition constituting the sidewall is, but not particularly limited to, preferably less than 10.0, more preferably less than 9.0, further preferably less than 8.0, further preferably less than 7.0, further preferably 6.5 or less, further preferably 5.5 or less. On the other hand, the value may be, for example, greater than 2.0, preferably greater than 2.5, more preferably 3.5 or more, further preferably 4.0 or more.

70°C $E^*_B$ and 70°C $E^*_S$ can be appropriately adjusted depending on types and compounding amounts of a rubber component, a filler, a plasticizing agent, and the like, which will be described below. For example, the complex elastic modulus, 70°C $E^*$, can be increased by increasing a content of a filler in the rubber composition, and conversely, can be decreased by decreasing the content of the filler.

(ARF)

In at least any of the reinforcing layer plies, $A_{RF}$, which is an angle at which an extending direction of reinforcing layer cord is inclined from the tire circumferential direction, is preferably different from $A_1$, and in particular, the inclination direction of $A_{RF}$ from the tire circumferential direction is preferably opposite to the inclination direction of $A_1$ from the tire circumferential direction. This is because twisting of the carcass ply arranged in a biased manner on the inner side of the tread part in the radial direction can be cancelled.

The reinforcing layer comprising the reinforcing layer ply in which the angle at which the extending direction of reinforcing layer cord is inclined from the tire circumferential direction is $A_{RF}$ (°) is preferably composed of one reinforcing layer ply, or it is preferably composed of a belt ply.

The pneumatic tire relating to the present embodiment comprises a tread and a carcass, the tread comprising a cap tread including a ground-contacting surface, and a base tread on an inner side of the cap tread in a tire radial direction.

<Rubber composition constituting base tread>

A rubber composition constituting a base tread will be described.

[Rubber component]

The rubber composition comprises a rubber component, the rubber component comprising at least one of an isoprene-based rubber (IR-based rubber), a styrene-butadiene rubber (SBR), and a butadiene rubber (BR). In this case, the rubber component can comprise rubber components other than an IR-based rubber, an SBR, and a BR. In one aspect, the rubber component preferably comprises an IR-based rubber. The rubber component can comprise other rubber components in addition to the IR-based rubber, but it may be one consisting of an IR-based rubber. In this case, the rubber component preferably comprises an IR-based rubber and a BR. The rubber component may comprise other rubber components in addition to the IR-based rubber and the BR, but it may be one consisting of an IR-based rubber and a BR. In yet another aspect, the rubber component preferably comprises an SBR or a BR, and more preferably comprises an SBR. When the rubber component comprises an SBR, the rubber component can comprise rubber components other than the SBR, but may be one consisting of an SBR.

(IR-based rubber)

As an IR-based rubber, for example, those common in the tire industry can be used, such as an isoprene rubber (IR), a natural rubber, and the like. Examples of the natural rubber includes a non-modified natural rubber (NR), as well as a modified natural rubber such as an epoxidized natural rubber (ENR), a hydrogenated natural rubber (HNR), a deproteinized natural rubber (DPNR), an ultra pure natural rubber (UPNR), and a grafted natural rubber, and the like. These isoprene-based rubbers may be used alone, or two or more thereof may be used in combination.
The NR is not particularly limited, and those common in the tire industry can be used, examples of which include, for example, SIR20, RSS#3, TSR20, and the like.
A content of an isoprene-based rubber when compounded in the rubber component is, for example, 50% by mass or more, preferably 55% by mass or more, more preferably 60% by mass or more, further preferably 65% by mass or more, further preferably 70% by mass or more. Moreover, the content is preferably less than 90% by mass, more preferably 85% by mass or less, further preferably less than 80% by mass.

(SBR)

An SBR is not particularly limited, and a solution-polymerized SBR (S-SBR), an emulsion-polymerized SBR (E-SBR), and modified SBRs (a modified S-SBR, a modified E-SBR) thereof can be used. Examples of the modified SBR include an SBR modified at its terminal and/or main chain, a modified SBR coupled with tin, a silicon compound, etc. (a modified SBR of condensate or having a branched structure, etc.), and the like. Furthermore, hydrogenated ones of these SBRs (hydrogenated SBRs) and the like can also be used. The SBR may be used alone, or two or more thereof may be used in combination.
The functional group of the modified SBR is preferably a functional group comprising at least one element selected from the group consisting of silicon, nitrogen, and oxygen. Examples of such a functional group include, for example, an amino group, an amide group, a silyl group, an isocyanate group, an imino group, an imidazole group, an urea group, an ether group, a carbonyl group, an oxycarbonyl group, a mercapto group, a sulfide group, a disulfide group, a sulfonyl group, a sulfinyl group, a thiocarbonyl group, an ammonium group, an imide group, a hydrazo group, an azo group, a diazo group, a carboxyl group, a nitrile group, a pyridyl group, an alkoxy group (preferably an alkoxy group having 1 to 6 carbon atoms), a hydroxyl group, an oxy group, an epoxy group, and the like. Among them, an amino group and/or an alkoxysilyl group are preferable. The amino group is preferably an amino group substituted with 1 or 2 alkyl groups having 1 to 6 carbon atoms. Specific examples of alkoxysilyl include, for example, trimethoxysilyl, triethoxysilyl, triisopropoxysilyl, dimethoxymethylsilyl, diethoxymethylsilyl, dimethylmethoxysilyl, dimethylethoxysilyl, and the like.
As an SBR, an oil-extended SBR can be used, or a non-oil-extended SBR can be used. As SBRs, those commercially available from JSR Corporation, Sumitomo Chemical Co., Ltd., UBE Corporation, Asahi Kasei Corporation, ZS Elastomer Co., Ltd., ARLANXEO, LG Chem, etc. can be used.
A styrene content of an SBR is preferably greater than 5% by mass, more preferably greater than 8% by mass, further preferably 10% by mass or more, further preferably 15% by mass or more, and it is preferably less than 50% by mass, more preferably less than 45% by mass, further preferably less than 40% by mass, from the viewpoint of the effects of the present invention. The styrene content of the SBR is measured by the above-described measuring method.
A vinyl content of an SBR is preferably greater than 5 mol%, more preferably greater than 10 mol%, further preferably greater than 15 mol%, from the viewpoint of the effects of the present invention. Moreover, it is preferably less than 55 mol%, more preferably less than 50 mol%, further preferably less than 45 mol%. The vinyl content of the SBR is measured by the above-described measuring method.
A weight-average molecular weight (Mw) of an SBR is preferably 100,000 or more, more preferably 150,000 or more, further preferably 190,000 or more, from the viewpoint of fuel efficiency. Moreover, the Mw is preferably 2,500,000 or less, more preferably 2,000,000 or less, from the viewpoints of cross-linking uniformity, etc. The Mw of the SBR is measured by the above-described measuring method.
A content of an SBR when compounded in the rubber component is preferably 30% by mass or more, more preferably greater than 40% by mass, further preferably 50% by mass or more, from the viewpoint of fuel efficiency. Moreover, an upper limit of the content is not particularly limited, and it may be 100% by mass, but it is preferably less than 90% by mass, more preferably less than 85% by mass, further preferably less than 80% by mass.

(BR)

A BR is not particularly limited, and those common in the tire industry can be used such as, for example, a BR having a cis content of less than 50 mol% (a low cis BR), a BR having a cis content of 90 mol% or more (a high cis BR), a rare-earth-based butadiene rubber synthesized using a rare-earth element-based catalyst (a rare-earth-based BR), a BR containing a syndiotactic polybutadiene crystal (an SPB-containing BR), a modified BR (a high cis modified BR, a low cis modified BR), and the like. The BR may be used alone, or two or more thereof may be used in combination.

As the high cis BR, for example, those commercially available from Zeon Corporation, UBE Corporation, JSR Corporation, etc. can be used. When the high cis BR is compounded, low temperature characteristics and abrasion resistance can be improved. A cis content of the high-cis BR is preferably greater than 90 mol%, more preferably greater than 95 mol%, further preferably 96 mol% or more. The cis content of the BR is measured by the above-described measuring method.

The rare-earth-based BR includes those which are synthesized using a rare-earth element-based catalyst and have a vinyl content of preferably less than 1.8 mol%, more preferably less than 1.5 mol%, further preferably less than 1.2 mol% and a cis content of preferably greater than 90 mol%, more preferably greater than 95 mol%, further preferably 96 mol% or more. As the rare-earth-based BR, for example, those commercially available from LANXESS, etc. can be used.

Examples of the SPB-containing BR include those in which 1,2-syndiotactic polybutadiene crystal is chemically bonded with BR and dispersed, but not those in which the crystal is simply dispersed in the BR. As such an SPB-containing BR, those commercially available from UBE Corporation, etc. can be used.

Examples of the modified BR include a BR modified with a functional group or the like similar to those described above for the SBR, and the like, and a modified butadiene rubber (a modified BR) modified at its terminal and/or main chain with a functional group comprising at least one element selected from the group consisting of silicon, nitrogen, and oxygen can be appropriately used.

Examples of other modified BRs include those obtained by adding a tin compound after polymerizing 1,3-butadiene by a lithium initiator, the end of which is further bonded by tin-carbon bond (tin-modified BR), and the like. Moreover, the modified BR may be either non-hydrogenated or hydrogenated.

A weight-average molecular weight (Mw) of a BR is preferably greater than 300,000, more preferably greater than 350,000, further preferably greater than 400,000. Moreover, it is preferably less than 2,000,000, more preferably less than 1,000,000, further preferably less than 700,000, from the viewpoints of cross-linking uniformity, etc. The Mw of the BR can be calculated by the above-described method.

A content of a BR in the rubber component is, but not particularly limited to, preferably greater than 10% by mass, more preferably 15% by mass or more, further preferably greater than 20% by mass, further preferably 25% by mass or more. Moreover, the content of the BR in the rubber component is preferably less than 50% by mass, more preferably less than 45% by mass, further preferably less than 40% by mass.

A total content of an IR-based rubber and a BR in 100% by mass of the rubber component is preferably greater than 80% by mass, more preferably greater than 90% by mass, further preferably greater than 95% by mass, and may be 100% by mass.

(Other rubber components)

The rubber component can comprise other rubber components in addition to the above-described isoprene-based rubber, SBR, and BR. As such rubber components, cross-linkable rubber components commonly used in the tire industry can be used, and more specifically, examples of such rubber components include diene-based rubbers such as a styrene-isoprene-butadiene copolymer rubber (SIBR), a styrene-isobutylene-styrene block copolymer (SIBS), a chloroprene rubber (CR), an acrylonitrile-butadiene rubber (NBR), and the like, non-diene-based rubbers such as a butyl rubber (IIR), an ethylene propylene rubber, a polynorbornene rubber, a silicone rubber, a polyethylene chloride rubber, a fluororubber (FKM), an acrylic rubber (ACM), a hydrin rubber, and the like. These other rubber components may be used alone, or two or more thereof may be used in combination. Moreover, besides the above-described rubber components, the rubber component may comprise a known thermoplastic elastomer.

(Rubber component synthesized from recycle-derived/biomass-derived raw material)

A monomer that is a structural unit of a synthetic rubber such as an SBR, a BR, and the like may be one derived from underground resources such as petroleum, a natural gas, and the like, or a recycled one from a rubber product such as a tire and the like or a non-rubber product such as polystyrene and the like. A monomer obtained by recycling (a recycled monomer) is not particularly limited, examples of which include a recycle-derived polyisoprene, a recycle-derived butadiene, a recycle-derived aromatic vinyl compound, and the like. Examples of the butadiene include 1,2-butadiene, 1,3-butadiene, and the like. The above-described aromatic vinyl compound is not particularly limited, examples of which include styrene and the like. Among them, a recycle-derived polyisoprene (a recycled polyisoprene) a recycle-derived butadiene (a recycled butadiene) and/or a recycle-derived styrene (a recycled styrene) are preferably used as a raw material.

A method of producing a recycled monomer is not particularly limited, examples of which include, for example, a method of synthesizing a monomer from a recycle-derived naphtha obtained by decomposing a rubber product such as a tire and the like. Moreover, a method of producing a recycle-derived naphtha is not particularly limited, and a recycle-derived naphtha may be obtained from, for example, a rubber product such as a tire and the like by decomposing it under high temperature and pressure, by decomposing it by microwaves, or by mechanically pulverizing it and then extracting therefrom.

Furthermore, a monomer that is a structural unit of a polymer such as an IR, an SBR, a BR, and the like may be a biomass-derived one. In the present specification, biomass refers to a material derived from natural sources such as plants and the like. Biomass is not particularly limited, examples of which include, for example, agricultural, forestry and fishery products, sugar, wood waste, a plant residue after acquisition of a useful component, a plant-derived ethanol, a biomass naphtha, and the like.

The biomass-derived monomer (biomass monomer) is not particularly limited, examples of which include a biomass-derived butadiene, a biomass-derived aromatic vinyl compound, and the like. Examples of the butadiene include 1,2-butadiene, 1,3-butadiene, and the like. The above-described aromatic vinyl compound is not particularly limited, examples of which include styrene and the like. Moreover, a method of producing a biomass monomer is not particularly limited, examples of which include, for example, one by a biological and/or a chemical and/or a physical conversion of animals and plants, and the like. A microbial fermentation is representative of biological conversion, and examples of chemical and/or physical conversion include one due to a catalyst, one due to a high heat, one due to a high pressure, one due to an electromagnetic wave, one due to a critical fluid, and combinations thereof.

A polymer synthesized from a biomass monomer component (biomass polymer) is not particularly limited, examples of which include a butadiene rubber synthesized from a biomass-derived butadiene, an aromatic vinyl/butadiene copolymer synthesized from a biomass-derived butadiene and/or a biomass-derived aromatic vinyl compound, and the like. Examples of the aromatic vinyl/butadiene copolymer include, for example, a styrene-butadiene rubber synthesized from a biomass-derived butadiene and/or a biomass-derived styrene, and the like.

Whether a raw material of a polymer is derived from biomass can be determined by pMC (percent Modern Carbon) measured according to ASTM D6866-10. pMC is a ratio of $^{14}C$ concentration of a sample to $^{14}C$ concentration of a modern standard carbon (modern standard reference) and a value used as an index indicating a biomass ratio of a compound. A significance of this value is mentioned below.

In 1 mole of carbon atoms ($6.02 \times 10^{23}$ pieces), there are about $6.02 \times 10^{11}$ $^{14}C$ that are about one trillionth of the number of normal carbon atoms. A half-life of $^{14}C$ is 5730 years, and $^{14}C$ regularly decreases. Thus, in fossil fuels such as coal, petroleum, a natural gas, and the like, where it is considered that 226,000 years or more have passed since carbon dioxide in the atmosphere was absorbed by plants to be fixed, all of $^{14}C$ elements, which were contained in them at the beginning of fixation, decay. Therefore, in the present 21st century, fossil fuels such as coal, petroleum, a natural gas, and the like do not contain any $^{14}C$ element. Therefore, chemical substances produced using these fossil fuels as raw materials do not contain any $^{14}C$ element as well.

On the other hand, $^{14}C$ is constantly generated by cosmic rays causing nuclear reactions in the atmosphere. Thus, decrease in $^{14}C$ due to radioactive decay and generation of $^{14}C$ due to nuclear reactions are balanced, and the amount of $^{14}C$ has been constant in the Earth's atmospheric environment. Therefore, the $^{14}C$ concentration of substances derived from biomass resources that have been circulating in the current environment becomes a value of about $1 \times 10^{-12}$ mol% based on total C atoms, as described above. Accordingly, by utilizing a difference between these values, a biomass ratio in a certain compound can be calculated.

This $^{14}C$ is generally measured as follows. A $^{13}C$ concentration ($^{13}C/^{12}C$) and a $^{14}C$ concentration ($^{14}C/^{12}C$) are measured using an accelerator mass spectrometry based on a tandem accelerator. In the measurements, a $^{14}C$ concentration in a circulating carbon in nature as of 1950 is adopted as the modern standard reference for the $^{14}C$ concentration. As a specific reference material, an oxalic acid standard provided by NIST (National Institute of Standards and Technology) is used. A specific radioactivity of carbon in this oxalic acid (radioactivity intensity of $^{14}C$ per gram of carbon) is sorted for each carbon isotope, $^{13}C$ is corrected to a constant value, and a value corrected for attenuation from 1950 to the date of measurement is used as a standard $^{14}C$ concentration value (100%). A ratio of this value to a value actually measured for a sample becomes a pMC value.

Thus, if a rubber is produced from a material derived from 100% biomass, the $^{14}C$ concentration shows a value of approximately 110 pMC, often not being equal to 100 under a normal condition currently, though there are regional differences and the like. On the other hand, if this $^{14}C$ concentration is measured for a chemical substance derived from a fossil fuel such as petroleum and the like, it shows a value of approximately 0 pMC (for example, 0.3 pMC). This value corresponds to a biomass ratio of 0% as mentioned above.

From above, it is appropriate in terms of environmental protection to use a material such as a rubber having a high pMC value, and the like, that is, a material such as a rubber having a high biomass ratio, and the like, for a rubber composition.

[Filler]

A filler preferably comprises carbon black. The carbon black may comprise a recovered carbon black (rCB). Furthermore, the filler may comprise fillers other than carbon black, and examples of such fillers include those conventionally and commonly used in the tire industry such as aluminum hydroxide, calcium carbonate, alumina, clay, talc, and the like, in addition to silica. The filler may be one comprising carbon black and silica, may be one consisting of carbon black and silica, or may be one consisting of carbon black.

(Carbon black)

Examples of carbon black include, but not particularly limited to, N134, N110, N220, N234, N219, N339, N330, N326, N351, N550, N762, and the like. A raw material of carbon black may be a biomass material such as lignin, a vegetable oil, and the like, or may be a pyrolysis oil obtained by pyrolyzing a waste tire, from the viewpoints of life cycle assessment, etc. Moreover, a method of producing carbon black may be one by combustion such as a furnace method and the like, one by hydrothermal carbonization (HTC), or one by pyrolysis of methane such as a thermal black method and the like. As commercially available products, products from, Asahi Carbon Co., Ltd., Cabot Japan K.K., Tokai Carbon Co., Ltd., Mitsubishi Chemical Corporation, Lion Corporation, NIPPON STEEL Chemical & Material Co., Ltd., Columbia Chemical Corporation, etc. can be used. Carbon black may be used alone, or two or more thereof may be used in combination.
Moreover, besides the above-described carbon black, from the viewpoint of life cycle assessment, carbon black made from a biomass material such as lignin and the like or a recovered carbon black obtained by pyrolyzing and refining a product including carbon black such as a tire and the like may be used as carbon black.
In the present specification, a "recovered carbon black" refers to a carbon black obtained by pulverizing a product such as a used tire comprising carbon black and the like and baking the pulverized product, in which, when the product is subjected to oxidative combustion by heating in the air, using a thermal weight measurement method according to JIS K 6226-2:2003, a ratio of a mass of ash (ash content), which is a component that does not combust, is 13% by mass or more. That is, a ratio of a mass (carbon amount) of a weight loss content due to the oxidative combustion of the recovered carbon black is 87% by mass or less. The recovered carbon black may be expressed by rCB.
The recovered carbon black can be obtained from a pyrolysis process of a used pneumatic tire. For example, EP 3427975 A describes, with reference to "Rubber Chemistry and Technology", Vol. 85, No. 3, Pages 408 to 449 (2012), in particular, Pages 438, 440, and 442, that the recovered carbon black can be obtained by pyrolysis at 550 to 800°C excluding oxygen or vacuum pyrolysis at a relatively low temperature, of an organic material ([0027]). Such carbon black obtained from the pyrolysis process usually lacks a functional group on its surface, as mentioned in [0004] of JP 6856781 B (A comparison of surface morphology and chemistry of pyrolytic carbon blacks with commercial carbon blacks, Powder Technology 160 (2005) 190-193).
The recovered carbon black may lack a functional group on its surface or may be treated so that its surface comprises a functional group. The treatment performed so that the surface of the recovered carbon black comprises a functional group can be implemented by a conventional method. For example, in EP3173251 A, carbon black comprising a hydroxyl and/or carboxyl group on its surface is obtained by treating carbon black obtained from a pyrolysis process with potassium permanganate under an acidic condition. Moreover, in JP 6856781 B, carbon black whose surface is activated is obtained by treating carbon black obtained from a pyrolysis process with an amino acid compound comprising at least one thiol group or disulfide group. The recovered carbon black relating to the present embodiment also comprises carbon black whose surface has been treated so as to comprise a functional group.
As the recovered carbon black, those commercially available from Strebl Green Carbon Pte Ltd., LD Carbon, etc. can be used.
A nitrogen adsorption specific surface area ($N_2SA$) of carbon black is, but not particularly limited to, preferably greater than 30 $m^2/g$, more preferably greater than 40 $m^2/g$, further preferably greater than 50 $m^2/g$, further preferably greater than 60 $m^2/g$, further preferably greater than 70 $m^2/g$, from the viewpoint of obtaining a sufficient reinforcing property and a good abrasion resistance. Moreover, an upper limit of the $N_2SA$ is preferably less than 300 $m^2/g$ from the viewpoints of an excellent dispersibility and unlikeliness for heat generation. Besides, the $N_2SA$ of the recovered carbon black in the present specification is a value measured by the above-described method.
A content of carbon black is preferably greater than 30 parts by mass, more preferably 35 parts by mass or more, further preferably greater than 40 parts by mass, further preferably greater than 50 parts by mass, based on 100 parts by mass of the rubber component, from the viewpoints of reinforcing property and crack growth resistance. Moreover, the content of the carbon black is preferably less than 100 parts by mass, more preferably 95 parts by mass or less, further preferably 85 parts by mass or less, from the viewpoint of a reinforcing effect.

(Silica)

The rubber composition may comprise silica as a filler. Silica is not particularly limited, and those common in the tire industry can be used, such as, for example, silica prepared by a dry process (anhydrous silica), silica prepared by a wet process (hydrous silica), and the like. A raw material of silica is not particularly limited, and may be, for example, mineral-derived raw materials such as quartz and the like, bio-derived raw materials such as rice husks and the like (e.g., silica made from a biomass material such as rice husks and the like), or silica recycled from a product containing silica. Among them, hydrous silica prepared by a wet process is preferable from the reason that it has many silanol groups. Silica may be used alone, or two or more thereof may be used in combination.

Silica made from a biomass material can be obtained by, for example, burning rice husks to obtain rice husk ashes, extracting silicate from the rice husk ashes using a sodium hydroxide solution, generating silicon dioxide by reacting the silicate with sulfuric acid in the same manner as for a conventional wet silica, and filtering, washing with water, drying and pulverizing precipitates of the silicon dioxide.

As silica recycled from a product containing silica, for example, silica recovered from an electronic component such as a semiconductor and the like, a tire, a product containing silica such as a desiccant, a filtering material such as diatomaceous earth and the like, etc. can be used. Moreover, a recovering method is not particularly limited, examples of which include pyrolysis, decomposition by electromagnetic waves, and the like. Among them, silica recovered from an electronic component such as a semiconductor and the like or from a tire is preferable.

When silica crystallizes, it is insoluble in water, and silicic acid that is a component thereof cannot be used. By controlling a burning temperature and a burning time, crystallization of silica in rice husk ashes can be suppressed (JP 2009-2594 A, Akita Prefectural University Web Journal B/2019, vol.6, p.216-222, etc.).

As an amorphous silica extracted from rice husks, those commercially available from Wilmar, etc. can be used.

A nitrogen adsorption specific surface area ($N_2SA$) of silica is preferably greater than 50 $m^2/g$, more preferably greater than 100 $m^2/g$, further preferably greater than 150 $m^2/g$, further preferably greater than 170 $m^2/g$. Moreover, an upper limit of the $N_2SA$ of silica is, but not particularly limited to, preferably less than 350 $m^2/g$, more preferably less than 250 $m^2/g$, further preferably less than 200 $m^2/g$. When it is within the above-described ranges, cut resistance tends to be improved. Besides, the $N_2SA$ of silica is a value measured by the above-described method.

A content of silica when compounded based on 100 parts by mass of the rubber component is, but not particularly limited to, preferably greater than 1 part by mass, more preferably greater than 5 parts by mass, more preferably greater than 10 parts by mass, further preferably greater than 20 parts by mass, from the viewpoint of securing fuel efficiency and ride comfort. Moreover, the content is preferably less than 60 parts by mass, more preferably less than 50 parts by mass, further preferably less than 40 parts by mass, from the viewpoints of dispersibility of silica and processability.

<<Silane coupling agent>>

When silica is used, it is preferable that the rubber composition further comprises a silane coupling agent. The silane coupling agent is not particularly limited, examples of which include, for example, sulfide-based silane coupling agents such as bis(3-triethoxysilylpropyl)tetrasulfide, bis(2-triethoxysilylethyl)tetrasulfide, bis(4-triethoxysilylbutyl)tetrasulfide, bis(3-trimethoxysilylpropyl)tetrasulfide, bis(2-trimethoxysilylethyl)tetrasulfide, bis(2-triethoxysilylethyl)trisulfide, bis(4-trimethoxysilylbutyl)trisulfide, bis(3-triethoxysilylpropyl)disulfide, bis(2-triethoxysilylethyl)disulfide, bis(4-triethoxysilylbutyl)disulfide, bis(3-trimethoxysilylpropyl)disulfide, bis(2-trimethoxysilylethyl)disulfide, bis(4-trimethoxysilylbutyl) disulfide, bis(3-trimethoxysilylpropyl)disulfide, bis(2-trimethoxysilylethyl)disulfide, bis(4-trimethoxysilylbutyl)disulfide, 3-trimethoxysilylpropyl-N,N-dimethylthiocarbamoyl tetrasulfide, 2-triethoxysilylethyl-N,N-dimethylthiocarbamoyl tetrasulfide, 3-triethoxysilylpropyl methacrylate monosulfide, and the like; mercapto-based silane coupling agents such as 3-mercaptopropyltrimethoxysilane, 2-mercaptoethyltriethoxysilane, NXT and NXT-Z manufactured by Momentive Performance Materials, and the like; vinyl-based silane coupling agents such as vinyltriethoxysilane, vinyltrimethoxysilane, and the like; amino-based silane coupling agents such as 3-aminopropyltriethoxysilane, 3-aminopropyltrimethoxysilane, and the like; glycidoxy-based silane coupling agents such as γ-glycidoxypropyltriethoxysilane, γ-glycidoxypropyltrimethoxysilane, and the like; nitro-based silane coupling agents such as 3-nitropropyltrimethoxysilane, 3-nitropropyltriethoxysilane, and the like; chloro-based silane coupling agents such as 3-chloropropyltrimethoxysilane, 3-chloropropyltriethoxysilane, and the like; and the like. As commercially available products, products from Evonik Industries AG, Momentive Performance Materials, Shin-Etsu Chemical Co., Ltd., Tokyo Chemical Industry Co., Ltd., AZmax.co, Dow Corning Toray Co., Ltd., etc. can be used. The silane coupling agent may be used alone, or two or more thereof may be used in combination.

A content of a silane coupling agent when compounded is preferably greater than 1 part by mass, more preferably greater than 3 parts by mass, further preferably greater than 5 parts by mass, further preferably greater than 7 parts by mass, based on 100 parts by mass of silica. On the other hand, the content is preferably less than 20 parts by mass, more preferably less than 18 parts by mass, further preferably less than 16 parts by mass, further preferably less than 14 parts by mass. When it is within the above-described ranges, dispersibility of silica tends to be improved.

[Other compounding agents]

The rubber composition can appropriately comprise compounding agents conventionally and commonly used in the tire industry, for example, a plasticizing agent, a compatibilizer, processing aid, a vulcanized rubber particle, wax, stearic acid, zinc oxide, an antioxidant, a vulcanizing agent, a vulcanization accelerator, and the like, in addition to rubber components and fillers.

(Plasticizing agent)

The plasticizing agent is a material that imparts plasticity to the rubber component, and has a concept that includes both a plasticizing agent in a liquid state at 25°C and a plasticizing agent that is solid at 25°C. Examples of the plasticizing agent include resin, oil, a liquid polymer, an ester-based plasticizing agent, and the like. These plasticizing agents may be ones derived from mineral resources such as petroleum, a natural gas, and the like, or naphtha-derived ones recycled from a rubber product or a non-rubber product. Moreover, low-molecular-weight hydrocarbon components obtained by pyrolyzing used tires or products containing these agents and performing extraction from the pyrolysate may be used as plasticizing agents. The plasticizing agent may be used alone, or two or more thereof may be used in combination.

<<Resin>>

The rubber composition relating to the present embodiment may comprise resin in combination. Resin that can be used in the present embodiment is not particularly limited, and any resin commonly used in the tire industry can be used, examples of which include, for example, a C9-based resin, a C5-based resin, a C5/C9-based resin, a dicyclopentadiene-based resin, an aromatic vinyl-based resin, a coumarone-based resin, an indene-based resin, a terpene-based resin, a rosin-based resin, a phenol-based resin, and the like. These resin may be used alone, or two or more thereof may be used in combination. Each resin may also be used alone, respectively, or two or more thereof may be used in combination.

· C9-based resin

A "C9-based resin" refers to resin obtained by polymerizing C9 fractions, and may be a polymer obtained by polymerizing a C9 fraction alone or a copolymer obtained by copolymerizing a C9 fraction with other components. For example, resin obtained by copolymerizing dicyclopentadiene (DCPD) with a C9 fraction is referred to as a DCPD/C9 resin. Moreover, the C9-based resin may be one obtained by hydrogenating or modifying them. Examples of the C9 fraction include, for example, a petroleum fraction having 8 to 10 carbon atoms such as vinyltoluene, alkylstyrene, coumarone, indene, methylindene, dicyclopentadiene, and the like. As the C9-based resin, for example, those commercially available from BASF, Zeon Corporation, ENEOS Corporation, etc. can be used.

· C5-bases resin

A "C5-based resin" refers to resin obtained by polymerizing C5 fractions and may be one obtained by hydrogenating or modifying them. Examples of C5 fractions other than dicyclopentadiene include, for example, a petroleum fraction having 4 to 5 carbon atoms, such as cyclopentadiene, isoprene, piperylene, 2-methyl-1-butene, 2-methyl-2-butene, 1-pentene, and the like. As the C5-based resin, for example, those commercially available from STRUKTOL, Zeon Corporation, ENEOS Corporation, etc. can be used.

· C5/C9-based resin

A "C5/C9-based resin" refers to resin obtained by copolymerizing the C5 fraction and the C9 fraction and may be one obtained by hydrogenating or modifying them. As the C5/C9-based petroleum resin, for example, those commercially available from Tosoh Corporation, Zibo Luhua Hongjin New Material Group Co., Ltd, etc. can be appropriately used.

· Dicyclopentadiene-based resin

A "dicyclopentadiene-based resin" refers to resin comprising cyclopentadiene (CPD) and/or dicyclopentadiene (DCPD) as a monomer component having the largest content and may be one obtained by hydrogenating or modifying them. As the dicyclopentadiene-based resin, for example, a polymer obtained by polymerizing only dicyclopentadiene as a monomer, a copolymer obtained by copolymerizing dicyclopentadiene with the C9 fraction (DCPD/C9 resin), and the like are preferable. As the dicyclopentadiene-based resin, for example, those commercially available from Exxon Mobil Corporation, ENEOS Corporation, Zeon Corporation, Maruzen Petrochemical Co., Ltd., etc. can be used.

· Aromatic vinyl-based resin

An "aromatic vinyl-based resin" refers to resin comprising an aromatic vinyl compound such as styrene, $\alpha$-methylstyrene, vinyltoluene, p-chlorostyrene, and the like as a monomer component having the largest content, and may be one obtained by hydrogenating or modifying them. As the aromatic vinyl-based resin, a homopolymer of $\alpha$-methyl-styrene or styrene or a copolymer of $\alpha$-methylstyrene and styrene is preferable, and a copolymer of $\alpha$-methylstyrene and styrene is more preferable, because it is economical, easy to process, and excellent in heat generation. As the aromatic vinyl-based resin, for example, those commercially available from Kraton Corporation, Eastman Chemical Company, Mitsui Chemicals, Inc., etc. can be used.

· Coumarone-based resin

A "coumarone-based resin" refers to a resin comprising coumarone as a monomer component and may be one obtained by hydrogenating or modifying it. As the coumarone-based resin, for example, a coumarone resin that is a polymer comprising only coumarone as a monomer component, a coumarone-indene resin that is a copolymer comprising coumarone and indene as monomer components, a coumarone-indene-styrene resin that is a copolymer comprising coumarone, indene, and styrene as monomer components, and the like are preferable. As the coumarone-based resin, for example, those commercially available from Rutgers Chemicals, Nitto Chemical Co., Ltd., Mitsui Chemicals, Inc., etc. can be used.

· Indene-based resin

An "indene-based resin" refers to a resin comprising indene as a monomer component and may be one obtained by hydrogenating or modifying it. As the indene-based resin, for example, a coumarone-indene resin that is a copolymer comprising coumarone and indene as monomer components, a coumarone-indene-styrene resin that is a copolymer comprising coumarone, indene, and styrene as monomer components, and the like are preferable. As the indene-based resin, for example, those commercially available from Rutgers Chemicals, Nitto Chemical Co., Ltd., Mitsui Chemicals, Inc., etc. can be used.

· Terpene-based resin

A "terpene-based resin" refers to resin comprising a terpene compound such as $\alpha$-pinene, $\beta$-pinene, limonene, dipentene, and the like as a monomer component, and may be one obtained by hydrogenating or modifying them. As the terpene-based resin, for example, a polyterpene resin that is a polymer comprising only one or more of the terpene compounds as monomer components, an aromatic-modified terpene resin that is a copolymer comprising the terpene compound and an aromatic compound as monomer components, a terpene phenolic resin that is a copolymer comprising the terpene compound and a phenol compound as monomer components, and the like are preferable. Examples of the aromatic compound used as a monomer component for the aromatic-modified terpene resin include, for example, styrene, $\alpha$-methylstyrene, vinyltoluene, divinyltoluene, and the like. Examples of the phenol compound used as a monomer component for the terpene phenolic resin include, for example, phenol, bisphenol A, cresol, xylenol, and the like. As the terpene-based resin, for example, those commercially available from Yasuhara Chemical Co., Ltd., Arakawa Chemical Industries, Ltd., Nippon Terpene Chemicals, Inc., etc. can be used.

· Rosin-based resin

A "rosin-based resin" refers to resin comprising a rosin acid compound such as abietic acid, neoabietic acid, palustric acid, isopimaric acid, and the like, and may be one obtained by hydrogenating or modifying them. Example of the rosin-based resin include, but not particularly limited to, for example, a natural resin rosin and a rosin-modified resin obtained by modifying the natural resin rosin by hydrogenation, disproportionation, dimerization, esterification, etc., and the like. As the rosin-based resin, for example, those commercially available from Harima Chemicals Group, Inc., Arakawa Chemical Industries, Ltd., IREC Co., Ltd., etc. can be used.

· Phenol-based resin

A "phenol-based resin" refers to resin comprising a phenolic compound such as phenol, cresol, and the like as a monomer component, and may be one obtained by hydrogenating or modifying them. Examples of the phenol-based resin include, but not particularly limited to, a phenol formaldehyde resin, an alkylphenol formaldehyde resin, an alkylphenol acetylene resin, an oil-modified phenol formaldehyde resin, a terpene phenolic resin, and the like. As the phenol-based resin, for example, those commercially available from Sumitomo Bakelite Co., Ltd., DIC Corporation, ASAHI YUKIZAI CORPORATION, etc. can be used.

A softening point of resin is preferably 60°C or higher, more preferably 70°C or higher, further preferably 80°C or higher, while on the other hand, it is preferably 150°C or lower, more preferably 140°C or lower, further preferably 130°C or lower, from the viewpoints of processability, an improvement of dispersibility between a rubber component and a filler, and the like. Besides, the softening point of resin is measured by the above-described measuring method.

A content of resin when compounded based on 100 parts by mass of the rubber component is preferably greater than 0.5 parts by mass, more preferably greater than 1 part by mass, further preferably greater than 2 parts by mass. On the other hand, the content is preferably less than 30 parts by mass, more preferably less than 20 parts by mass, further preferably less than 15 parts by mass.

<<Oil>>

Examples of oil include, for example, a mineral oil, a vegetable oil, an animal oil, and the like. Moreover, from the viewpoint of life cycle assessment, those obtained by purifying a waste oil after being used in a rubber mixer or an engine, or a waste cooking oil used in a restaurant, may be used. Oil may be used alone, or two or more thereof may be used in combination.

In the present specification, a mineral oil refers to oil derived from mineral resources such as petroleum, a natural gas, and the like. Examples of the mineral oil include paraffinic oils (mineral oils), naphthenic oils, aromatic oils, and the like. Specific examples of the mineral oil include, for example, MES (Mild Extracted Solvate), DAE (Distillate Aromatic Extract), TDAE (Treated Distillate Aromatic Extract), TRAE (Treated Residual Aromatic Extract), RAE (Residual al Aromatic Extract), and the like. Moreover, as an environmental measure, an oil having a low content of a polycyclic aromatic compound (PCA) can also be used. Examples of the oil having a low content of a PCA content include MES, TDAE, a heavy naphthenic oil, and the like. The mineral oil may be used alone, or two or more thereof may be used in combination.

In the present specification, examples of the vegetable oil include, for example, a linseed oil, a rapeseed oil, a safflower oil, a soybean oil, a corn oil, a cottonseed oil, a rice oil, a tall oil, a sesame oil, a perilla oil, a castor oil, a tung oil, a pine oil, a pine tar oil, a sunflower oil, a coconut oil, a palm oil, a palm kernel oil, an olive oil, a camellia oil, a jojoba oil, a macadamia nut oil, a peanut oil, a grapeseed oil, a Japan wax, and the like. Furthermore, examples of the vegetable oil also include a refined oil obtained by refining the above-described oil (a salad oil, etc.), a transesterified oil obtained by transesterifying the above-described oil, a hydrogenated oil obtained by hydrogenating the above-described oil, a thermally polymerized oil obtained by thermally polymerizing the above-described oil, an oxidized polymerized oil obtained by oxidizing the above-described oil, a waste cooking oil obtained by recovering what was utilized as an edible oil, etc., and the like. Besides, the vegetable oil may be liquid or solid at 25°C. The vegetable oil may be used alone, or two or more thereof may be used in combination.

The vegetable oil relating to the present embodiment preferably comprises acylglycerol, and more preferably comprises triacylglycerol. Besides, in the present specification, acylglycerol refers to a compound in which a hydroxy group of glycerin and a fatty acid are ester-bonded. Acylglycerol is not particularly limited, and may be 1-monoacylglycerol, 2-monoacylglycerol, 1,2-diacylglycerol, 1,3-diacylglycerol, or triacylglycerol. Furthermore, acylglycerol may be a monomer, a dimer, or a multimer that is a trimer or higher. Besides, acylglycerol that is a dimer or higher can be obtained by thermal polymerization, oxidative polymerization, or the like. In addition, acylglycerol may be liquid or solid at 25°C.

As a method of confirming whether the rubber composition comprises acylglycerol, the confirmation can be performed by, but not particularly limited to, $^1$H-NMR measurement. For example, a heavy chloroform in which a rubber composition comprising triacylglycerol is immersed at 25°C for 24 hours and then removed is subjected to $^1$H-NMR at room temperature, and signals near 5.26 ppm, near 4.28 ppm, and near 4.15 ppm are observed under a condition that a signal of tetramethylsilane (TMS) is set to 0.00 ppm. The signals are presumed to be derived from hydrogen atoms bonded to carbon atoms adjacent to oxygen atoms of an ester group. Besides, "near" in this paragraph shall be a range of $\pm 0.10$ ppm.

The above-described fatty acid is not particularly limited and may be an unsaturated fatty acid or a saturated fatty acid. Examples of the unsaturated fatty acid include a monounsaturated fatty acid such as oleic acid and the like, and a polyunsaturated fatty acid such as linoleic acid, linolenic acid, and the like. Moreover, examples of the saturated fatty acid include butyric acid, lauric acid, and the like.

Among them, as the fatty acid, a fatty acid having few double bonds, that is, a saturated fatty acid or a monounsaturated fatty acid is desired, and oleic acid is preferable. As a vegetable oil comprising such fatty acid, for example, a vegetable oil comprising a saturated fatty acid or a monounsaturated fatty acid may be used, or a vegetable oil modified by transesterification or the like may be used. Moreover, in order to produce a vegetable oil comprising such fatty acid, a plant may be improved by selective breeding, gene recombination, genome editing, or the like.

As the vegetable oil, for example, those commercially available from Idemitsu Kosan Co., Ltd., Sankyo Yuka Kogyo K.K., ENEOS Corporation, Olisoy, H&R Group, Hokoku Corporation, Fuji Kosan Co., Ltd., The Nisshin OilliO Group, Ltd., etc. can be used.

Examples of the animal oil include a fish oil, a beef tallow, an oleyl alcohol that can be derived therefrom, and the like.

A content of oil based on 100 parts by mass of the rubber component is preferably greater than 1 part by mass, more preferably greater than 2 parts by mass, further preferably 3 parts by mass or more. Moreover, the content is preferably less than 20 parts by mass, more preferably less than 15 parts by mass, further preferably 10 parts by mass or less. Besides, the content of oil includes an amount of oil contained in the rubber component as an extending oil and an amount of oil contained in other components such as sulfur and the like.

<<Liquid polymer>>

The liquid polymer is a polymer in a liquid state at 25°C, examples of which include, for example, a liquid diene-based polymer. Examples of the liquid diene-based polymer include a liquid styrene-butadiene copolymer (a liquid SBR), a liquid butadiene polymer (a liquid BR), a liquid isoprene polymer (a liquid IR), a liquid styrene-isoprene copolymer (a liquid SIR), and the like. The liquid diene-based polymer has a number average molecular weight (Mn), in terms of polystyrene, as measured by gel permeation chromatography (GPC), of preferably greater than 1000, more preferably greater than 3000. On the other hand, the Mn is preferably less than 100000, more preferably less than 15000. The Mn of the liquid polymer is a value in terms of polystyrene as measured by gel permeation chromatography (GPC). As the liquid diene-based polymer, for example, products from Sartomer, Kuraray Co., Ltd., etc. can be used. The liquid polymer may be used alone, or two or more thereof may be used in combination.

<<Ester-based plasticizing agent>>

Examples of the ester-based plasticizing agent include, for example, dibutyl adipate (DBA), diisobutyl adipate (DIBA), dioctyl adipate (DOA), bis(2-ethylhexyl) azelate (DOZ), dibutyl sebacate (DBS), diisononyl adipate (DINA), diethyl phthalate (DEP), dioctyl phthalate (DOP), diundecyl phthalate (DUP), dibutyl phthalate (DBP), dioctyl sebacate (DOS), tributyl phosphate (TBP), trioctyl phosphate (TOP), triethyl phosphate (TEP), trimethyl phosphate (TMP), thymidine triphosphate (TTP), tricresyl phosphate (TCP), trixylenyl phosphate (TXP), and the like. The ester-based plasticizing agent may be used alone, or two or more thereof may be used in combination.

(Processing aid)

Examples of processing aid include, for example, a fatty acid metal salt, a fatty acid amide, an amide ester, a silica surface active agent, a mixture of a fatty acid metal salt and an amide ester, a mixture of a fatty acid metal salt and a fatty acid amide, and the like. As processing aid, for example, those commercially available from Schill+Seilacher GmbH, Performance Additives, etc. can be used. Processing aid may be used alone, or two or more thereof may be used in combination.

A content of processing aid when compounded based on 100 parts by mass of the rubber component is preferably greater than 0.5 parts by mass, more preferably greater than 1 part by mass, further preferably greater than 1.5 parts by mass, from the viewpoint of exhibiting an effect of improving processability. Moreover, it is preferably less than 10 parts by mass, more preferably less than 8.0 parts by mass, further preferably less than 5.0 parts by mass, from the viewpoints of abrasion resistance and breaking strength.

(Vulcanized rubber particle)

A vulcanized rubber particle is a particle made of a vulcanized rubber, and specifically, a rubber powder and the like specified in JIS K 6316:2017 can be used. From the viewpoints of environmental considerations and costs, a recycled rubber powder produced from a pulverized product of a waste tire or the like is preferable. The vulcanized rubber particle is not particularly limited and may be a non-modified vulcanized rubber particle or a modified vulcanized rubber particle. As commercially available products of vulcanized rubbers, for example, products from Lehigh Technologies, Muraoka Rubber Reclaiming Co., Ltd., etc. can be used. The vulcanized rubber particle may be used alone, or two or more thereof may be used in combination.

(Wax)

Wax is not particularly limited, and any of those commonly used in the tire industry can be appropriately used, examples of which include, for example, a mineral-based wax, a plant-derived wax, and the like. The mineral-based wax refers to wax derived from mineral resources such as oil, a natural gas, and the like. The plant-derived wax refers to wax derived from natural resources such as a plant and the like. Among them, the mineral-based wax is preferable. Examples of the plant-derived wax include, for example, a rice wax, a carnauba wax, a candelilla wax, and the like. Examples of the mineral-based wax include, for example, a paraffin wax, a microcrystalline wax, specially selected waxes thereof, and the like. Among them, a paraffin wax is preferable. Besides, wax relating to the present embodiment shall not comprise stearic acid. As wax, for example, those commercially available from Ouchi Shinko Chemical Industry Co., Ltd., Nippon Seiro Co., Ltd., Paramelt B.V., etc. can be used. Wax may be used alone, or two or more thereof may be used in combination.

A content of wax when compounded based on 100 parts by mass of the rubber component is preferably greater than 0.3 parts by mass, more preferably greater than 0.7 parts by mass, further preferably greater than 1.0 parts by mass. On the other hand, the content is preferably less than 4.0 parts by mass, more preferably less than 3.0 parts by mass, further preferably less than 2.5 parts by mass.

(Stearic acid)

A content of stearic acid when compounded based on 100 parts by mass of the rubber component is preferably greater than 0.5 parts by mass, more preferably greater than 0.7 parts by mass, further preferably 1.0 parts by mass or more, from the viewpoint of processability. On the other hand, the content is preferably less than 10 parts by mass, more preferably less than 5 parts by mass, further preferably less than 3 parts by mass, from the viewpoint of vulcanization rate.

(Zinc oxide)

A content of zinc oxide when compounded based on 100 parts by mass of the rubber component is preferably greater than 0.5 parts by mass, more preferably greater than 0.7 parts by mass, further preferably 1 part by mass or more, from the viewpoint of processability. On the other hand, the content is preferably less than 10 parts by mass, more preferably less than 5 parts by mass, further preferably less than 3 parts by mass, from the viewpoint of abrasion resistance.

(Antioxidant)

Examples of an antioxidant include, but not particularly limited to, a naphthylamine-based antioxidant such as phenyl-$\alpha$-naphthylamine and the like; a diphenylamine-based antioxidant such as an octylated diphenylamine, 4,4'-bis($\alpha,\alpha$'-dimethylbenzyl)diphenylamine, and the like; p-phenylenediamine-based antioxidant such as N-isopropyl-N'-phenyl-p-phenylenediamine, N-(1,3-dimethylbutyl)-N'-phenyl-p-phenylenediamine (6PPD), N,N'-bis(1,4-dimethylpentyl)-p-phenylenediamine (77PD), N,N'-diphenyl-p-phenylenediamine (DPPD), N,N'-ditolyl-p-phenylenediamine (DTPD), N-isopropyl-N'-phenyl-p-phenylenediamine (IPPD), N,N'-di-2-naphthyl-p-phenylenediamine (DNPD), and the like; a quinoline-based antioxidant such as a polymer of 2,2,4-trimethyl-1,2-dihydroquinoline and the like; a monophenol-based antioxidant such as 2,6-di-t-butyl-4-methylphenol, a styrenated phenol, and the like; bis-, tris-, and polyphenol-based antioxidants such as tetrakis-[methylene-3-(3',5'-di-t-butyl-4'-hydroxyphenyl)propionate]methane and the like. Among them, p-phenylenediamine-based antioxidants and quinoline-based antioxidants are preferable, and N-(1,3-dimethylbutyl)-N'-phenyl-p-phenylenediamine and a polymer of 2,2,4-trimethyl-1,2-dihydroquinoline are more preferable. As commercially available products, for example, products manufactured by Seiko Chemical Co., Ltd., Sumitomo Chemical Co., Ltd., Ouchi Shinko Chemical Industry Co., Ltd., Flexsys, etc. can be used. The antioxidant may be used alone, or two or more thereof may be used in combination.

A content of an antioxidant when compounded based on 100 parts by mass of the rubber component is preferably greater than 0.5 parts by mass, more preferably greater than 0.8 parts by mass, further preferably greater than 1.0 parts by mass. On the other hand, the content is preferably less than 7.0 parts by mass, more preferably less than 5.0 parts by mass, further preferably 3.0 parts by mass or less.

(Vulcanizing agent)

The vulcanizing agent is not particularly limited, and any known vulcanizing agent can be used, examples of which include, for example, an organic peroxide, a sulfur-based vulcanizing agent, a resin vulcanizing agent, metal oxide such as magnesium oxide and the like, etc. Among them, a sulfur-based vulcanizing agent is preferable. As the sulfur-based vulcanizing agent, for example, sulfur, a sulfur donor such as morpholine disulfide and the like, etc. can be used.

Among them, it is preferable to use sulfur. The vulcanizing agent can be used alone, or two or more thereof can be used in combination.

Examples of sulfur include a powdered sulfur, a precipitated sulfur, a colloidal sulfur, a surface processing sulfur (an oil processing sulfur, a special sulfur processed with a dispersant, a masterbatch type sulfur, etc.), an insoluble sulfur (oil processing insoluble sulfur, etc.), and the like, any of which are appropriately used. Among them, a powdered sulfur is preferable. As sulfur, for example, those manufactured and sold by Tsurumi Chemical Industry Co., Ltd., Karuizawa Sulfur Co., Ltd., Shikoku Chemicals Corporation, Flexsys, Nippon Kanryu Industry Co., Ltd., Hosoi Chemical Industry Co., Ltd., etc., and the like can be used.

As a vulcanizing agent, a known organic cross-linking agent can also be used. The organic cross-linking agent is not particularly limited as long as it can form cross-linked chains other than a polysulfide bond, examples of which, include, for example, an alkylphenol-sulfur chloride condensate, sodium hexamethylene-1,6-bisthiosulfate dihydrate, 1,6-bis(N,N'-dibenzylthiocarbamoyldithio)hexane, dicumylperoxide, and the like. Among them, 1,6-bis(N,N'-dibenzylthiocarbamoyldithio)hexane is preferable. As these organic cross-linking agents, those commercially available from Taoka Chemical Co., Ltd., LANXESS, Flexsys, etc. can be used.

A content of a vulcanizing agent when compounded based on 100 parts by mass of the rubber component is preferably greater than 0.4 parts by mass, more preferably 0.5 parts by mass or more, further preferably 1.0 parts by mass or more. On the other hand, the content is preferably less than 6.0 parts by mass, more preferably less than 4.0 parts by mass, further preferably less than 2.0 parts by mass. When the content of the vulcanizing agent is within the above-described ranges, an appropriate reinforcing effect tends to be obtained. Besides, when the vulcanizing agent comprises a component other than sulfur, such as oil processing sulfur and the like, a content of the vulcanizing agent means a content of the sulfur component itself.

(Vulcanization accelerator)

The vulcanization accelerator is not particularly limited, and any known vulcanization accelerator can be used, examples of which include, for example, sulfenamide-based, thiazole-based, thiuram-based, thiourea-based, guanidine-based, dithiocarbamic acid-based, aldehyde-amine-based or aldehyde-ammonia-based, imidazoline-based, and xantate-based vulcanization accelerators, and the like. Among them, thiazole-based, sulfenamide-based, thiuram-based, and guanidine-based vulcanization accelerators are preferable, thiazole-based and sulfenamide-based vulcanization accelerators are more preferable, and thiazole-based vulcanization accelerators are further preferable. As the vulcanization accelerator, for example, those manufactured and sold by Ouchi Shinko Chemical Industry Co., Ltd., Sanshin Chemical Industry Co., Ltd., etc. can be used. The vulcanization accelerator can be used alone, or two or more thereof can be used in combination.

Examples of the sulfenamide-based vulcanization accelerator include, for example, N-tert-butyl-2-benzothiazolylsulfenamide (TBBS), N-cyclohexyl-2-benzothiazolylsulfenamide (CBS), N,N-dicyclohexyl-2-benzothiazolylsulfenamide (DZ), and the like. Examples of the thiazole-based vulcanization accelerator include, for example, 2-mercaptobenzothiazole (MBT) or a salt thereof, di-2-benzothiazolyl disulfide (MBTS), 2-(2,4-dinitrophenyl)mercaptobenzothiazole, 2-(2,6-diethyl-4-morpholinothio)benzothiazole, and the like. Examples of the guanidine-based vulcanization accelerator include, for example, 1,3-diphenylguanidine (DPG), diorthotrilguanidine, orthotrilbiguanidine, and the like. Examples of the thiuram-based vulcanization accelerator include, for example, tetramethylthiuram monosulfide, tetramethylthiuram disulfide, tetrabenzylthiuram disulfide (TBzTD), and the like.

A content of a vulcanization accelerator based on 100 parts by mass of the rubber component is preferably greater than 0.3 parts by mass, more preferably greater than 0.5 parts by mass, further preferably 1.0 parts by mass or more. On the other hand, the content is preferably less than 8.0 parts by mass, more preferably less than 7.0 parts by mass, further preferably less than 6.0 parts by mass. When the content of the vulcanization accelerator is within the above-described ranges, breaking strength and elongation tend to be secured.

<Rubber composition constituting sidewall>

Each component of the rubber composition constituting the sidewall will be described.

[Rubber component]

Explanation for a rubber component is as described below, and the explanation given for the rubber composition constituting the base tread is applied thereto.

The rubber component preferably comprises an isoprene-based rubber (IR-based rubber). The rubber component can comprise other rubber components in addition to the IR-based rubber, and more preferably comprises an isoprene-based rubber (IR-based rubber) and a butadiene rubber (BR). The rubber component can comprise rubber components other than the IR-based rubber and the BR, but the rubber component may be one consisting of an IR-based rubber and a BR.

(Content)

Regarding a content of the rubber component, a content rate of an IR-based rubber in 100% by mass of the rubber component is, for example, greater than 10% by mass, preferably greater than 20% by mass, more preferably greater than 30% by mass, further preferably 35% by mass or more. On the other hand, the content is, for example, 60% by mass or less, preferably less than 55% by mass, more preferably less than 50% by mass, further preferably 45% by mass or less. When the content is within the above-described ranges, both durability and fuel efficiency tend to be easily achieved.

Moreover, a content of a BR when compounded in 100% by mass of the rubber component is, for example, greater than 20% by mass, preferably greater than 30% by mass, more preferably greater than 40% by mass. On the other hand, the content is, for example, less than 80% by mass, preferably less than 75% by mass, more preferably less than 70% by mass, further preferably 65% by mass or less. When the content is within the above-described ranges, both durability and fuel efficiency tend to be easily achieved.

Furthermore, a total content of an IR-based rubber and a BR when compounded in 100% by mass of the rubber component is preferably greater than 80% by mass, more preferably greater than 90% by mass, further preferably greater than 95% by mass, and may be 100% by mass.

[Filler]

A filler may comprise carbon black (CB) and silica. It preferably comprises carbon black. When the filler comprises silica, it may further comprise a silane coupling agent. The filler may further comprise other fillers besides carbon black and silica. Explanation for each component that may constitute the filler is as described below, and the explanation given in the section for the rubber composition constituting the base tread is applied thereto.

(Content of carbon black)

A content of carbon black when compounded is, for example, greater than 20 parts by mass, preferably 30 parts by mass or more, more preferably 35 parts by mass or more, further preferably 40 parts by mass or more, based on 100 parts by mass of the rubber component. On the other hand, the total content is preferably less than 80 parts by mass, more preferably less than 75 parts by mass, further preferably 70 parts by mass or less. When the content of carbon black is within the above-described ranges, a sufficient reinforcing property and a good dispersion in a rubber are obtained, and a sufficient rubber strength and crack resistance tend to be obtained.

[Other compounding agents]

The rubber composition constituting the sidewall can appropriately comprise compounding agents conventionally and commonly used in the tire industry, for example, other compounding agents such as a plasticizing agent, a compatibilizer, processing aid, a vulcanized rubber particle, wax, stearic acid, zinc oxide, an antioxidant, a vulcanizing agent, a vulcanization accelerator, and the like, in addition to rubber components and fillers. Explanation for other compounding agents is as described below, and the explanation given for the rubber composition constituting the base tread is similarly applied thereto.

The rubber composition constituting the sidewall preferably comprises a plasticizing agent, and preferably comprises resin. As resin, in particular, a C5/C9-based resin can be used more appropriately. A content of resin when compounded based on 100 parts by mass of the rubber component is preferably greater than 0.5 parts by mass, more preferably greater than 1 part by mass, further preferably greater than 2 parts by mass. On the other hand, the content is preferably less than 15 parts by mass, more preferably less than 10 parts by mass, further preferably less than 5 parts by mass.

In the present specification, various materials comprising carbon atoms (for example, a rubber, oil, resin, a vulcanization accelerator, an antioxidant, a surfactant, etc.) may be derived from carbon dioxide in the atmosphere. As a method of obtaining compounds relating to the present embodiment from carbon dioxide, carbon dioxide may be directly converted, or methane obtained through a methanation step for synthesizing methane from carbon dioxide may be converted.

The rubber composition relating to the present embodiment can be produced by a known method. For example, it can be produced by kneading each of the above-described components using a rubber kneading apparatus such as an open roll, a closed type kneader (Bunbury mixer, kneader, etc.), and the like.

The kneading step includes, for example, a base kneading step of kneading compounding agents and additives other than vulcanizing agents and vulcanization accelerators and a final kneading (F kneading) step of adding vulcanizing agents and vulcanization accelerators to the kneaded product obtained by the base kneading step and kneading them. Furthermore, the base kneading step can be divided into a plurality of steps, if desired. In the case where the base kneading step is divided, the method may be (1) a method of kneading some of compounding agents and additives in advance into a masterbatch, and then adding the remaining compounding agents and additives to the obtained masterbatch and kneading them, (2) a method of kneading all of the compounding agents and additives in the base kneading step at once, and then remilling the kneaded product one or more times, or the like. In the above-described method (1), the number of masterbatches is not limited and may be two or more. Moreover, when the number of masterbatches is two or more, all of the compounding agents and additives used in the base kneading step may be allocated to any of the masterbatches.

A kneading condition is not particularly limited. Examples of kneading include, for example, in the base kneading step, a method of kneading at a discharge temperature of 150 to 170°C for 3 to 10 minutes, and in the final kneading step, a method of kneading at 70 to 110°C for 1 to 5 minutes.

The pneumatic tire relating to the present embodiment can be produced by a conventional method using an unvulcanized rubber composition as obtained above. That is, each of the rubber compositions obtained above can be extruded into a desired shape of a tire member, respectively, at an unvulcanized stage to form unvulcanized base tread and sidewall, respectively. The unvulcanized base tread and sidewall thus obtained are attached together with other tire members on a tire molding machine by a usual method to form an unvulcanized tire. At this time, a carcass cord is configured to have a predetermined structure. Moreover, a reinforcing layer is configured to have a predetermined structure as required. The unvulcanized tire thus obtained is heated and pressurized in a vulcanizer, whereby a pneumatic tire relating to the present embodiment can be produced. Examples of a vulcanization condition include, but not particularly limited to, for example, a method of vulcanizing at 150 to 200°C for 10 to 40 minutes.

<Applications>

The pneumatic tire relating to the present embodiment can be used for any applications, and can be used as a tire for a passenger car, a tire for a large passenger car, a tire for a large SUV, a racing tire, a motorcycle tire, a heavy-duty tire, or a run flat tire. Besides, the tire for a passenger car is a tire on the premise that it is mounted on a car running on four wheels and refers to one having a maximum load capacity of less than 1400 kg. Moreover, the heavy-duty tire refers to a tire with a maximum load capacity of 1400 kg or more. Moreover, in the present specification, the tire can be used as an all-season tire, a summer tire, or a winter tire such as a studless tire and the like.

EXAMPLES

Examples considered to be preferable in implementation (Examples) are shown below, though the scope of the present invention is not limited to Examples. Results calculated based on the following evaluation methods considering a tire having a base tread and a sidewall obtained using various chemicals shown below, and a tire structure, according to each table, are shown in the lower part of each Table.

<Various chemicals>

Various chemicals used in Examples and Comparative examples are collectively shown below.

NR: TSR20 (natural rubber)
SBR: SBR1502 manufactured by JSR Corporation (unmodified E-SBR, styrene content: 23.5% by mass, vinyl content: 18 mol%, Tg: -56°C, Mw: 440,000, non-oil extended)
BR1: BR730 manufactured by JSR Corporation (unmodified high-cis BR, cis content: 96 mol%, Mw: 440,000)
BR2: BR150B manufactured by JSR Corporation (unmodified high-cis BR, cis content: 95 mol%, Mw: 580,000)
Carbon black 1 (CB1): Show Black N351H manufactured by Cabot Japan K.K. ($N_2SA$: 69 $m^2$/g, average primary particle size: 29 nm, ash content: 1.0% by mass or less)
Carbon black 2 (CB2): Show Black N550 manufactured by Cabot Japan K.K. ($N_2SA$: 42 $m^2$/g, average primary particle size: 48 nm, ash content: 1.0% by mass or less)
Oil: VIVATEC 500 manufactured by H&R Group (aroma-based process oil)
Resin: Petrotack 100V manufactured by Tosoh Corporation (C5/C9-based resin, softening point: 96°C)
Wax: OZOACE 0355SR manufactured by Nippon Seiro Co., Ltd. Antioxidant 1: Nocrac 6C manufactured by Ouchi Shinko Chemical Industry Co., Ltd. (N-(1,3-dimethylbutyl)-N'-phenyl-p-phenylenediamine)
Antioxidant 2: Nocrac RD manufactured by Ouchi Shinko Chemical Industry Co., Ltd. (poly(2,2,4-trimethyl-1,2-dihydroquinoline))
Stearic acid: Bead stearic acid "CAMELLIA" (manufactured by NOF CORPORATION)
Zinc oxide: Zinc oxide No. 2 (manufactured by Mitsui Mining & Smelting Co., Ltd.)
Sulfur: Seimi sulfur manufactured by Nippon Kanryu Industry Co., Ltd. (oil content: 10% by mass)
Vulcanization accelerator 1: Nocceler CZ manufactured by Ouchi Shinko Chemical Industry Co., Ltd. (N-cyclohexyl-2-benzothiazolylsulfenamide)
Vulcanization accelerator 2: Nocceler NS manufactured by Ouchi Shinko Chemical Industry Co., Ltd. (di-2-benzothiazolyl disulfide)
Vulcanization accelerator 3: Nocceler M manufactured by Ouchi Shinko Chemical Industry Co., Ltd. (2-mercaptobenzothiazole)

<Examples and Comparative examples>

According to the compounding formulations shown in Table 1, chemicals other than sulfur and vulcanization accelerators are kneaded using a 1.7 L Banbury mixer for 5 minutes until a temperature reaches a discharge temperature at 160°C to obtain a kneaded product. Next, sulfur and vulcanization accelerators are added to the obtained kneaded product, and using a twin-screw open roll, the mixture is kneaded for 4 minutes until the temperature reaches 105°C to obtain an unvulcanized rubber composition for base tread.

According to the compounding formulations shown in Table 2, chemicals other than sulfur and vulcanization accelerators are kneaded using a 1.7 L Banbury mixer for 5 minutes until a temperature reaches a discharge temperature at 160°C to obtain a kneaded product. Next, sulfur and vulcanization accelerators are added to the obtained kneaded product, and using a twin-screw open roll, the mixture is kneaded for 4 minutes until the temperature reaches 105°C to obtain an unvulcanized rubber composition for sidewall.

The unvulcanized rubber composition for base tread and the unvulcanized rubber composition for sidewall are used to be extruded into a shape of a base tread or a sidewall with an extruder equipped with a mouthpiece having a predetermined shape, respectively, which is then attached together with other tire members to prepare an unvulcanized tire, and the unvulcanized tire is press-vulcanized under a condition at 150°C for 35 minutes to produce each test tire (tire size: 185/65R14) shown in Tables 3 and 4.

A tire structure in each Table will be described. In the tire in Table 3, an inclination angle of a carcass cord is +75° for $A_1$ and +85° for $A_2$. Thus, for the inequality (1), $|A_2-A_1|=10°$. Moreover, in the tire of Table 4, an inclination angle of a carcass cord is +75° for $A_1$ and +80° for $A_2$. Thus, for the inequality (1), $|A_2-A_1|=5°$. Besides, the carcass cord is a polyester cord.

In each Table, the value of $|70°C\ E^*_B-70°C\ E^*_S|/|A_2-A_1|$ is a value comparable to the constant K in the inequality (2). That is, if the value is smaller than the constant K, the inequality (2) is satisfied, and conversely, if the value is equal to or greater than the constant K, the inequality (2) is not satisfied.

<Durability>

Each test tire is mounted on a drum tester, and a time and a speed until the tire is damaged after increasing the speed from 210 km/h stepwise by 10 km/h with a vertical load of 5.88 kN applied are measured. The results are indicated as indexes with the reference Comparative example being as 100, showing that the larger the numerical value is, the longer the time until the tire is damaged becomes and the more excellent the durability is.

Table 1

| | Compounding | | | | | | | | | |
|---|---|---|---|---|---|---|---|---|---|---|
| | A | B | C | D | E | F | G | H | I | J |
| Compounding for base tread (parts by mass) | | | | | | | | | | |
| NR | - | - | 75 | 75 | - | - | 75 | 75 | - | 75 |
| SBR1 | 100 | 100 | - | - | 100 | 100 | - | - | 100 | - |
| BR1 | - | - | 25 | 25 | - | - | 25 | 25 | - | 25 |
| BR2 | - | - | - | - | - | - | - | - | - | - |
| CB1 | 85 | 95 | 10 | 36 | 85 | 85 | 53 | 41 | 85 | 35 |
| CB2 | - | - | 22 | - | - | - | - | - | - | - |

(continued)

| | Compounding | | | | | | | | | |
|---|---|---|---|---|---|---|---|---|---|---|
| | A | B | C | D | E | F | G | H | I | J |
| **Compounding for base tread (parts by mass)** | | | | | | | | | | |
| Oil | 12 | 10 | 30 | 5.0 | 18 | 25 | 6.0 | 5.0 | 21 | 30 |
| Resin component | - | - | - | - | - | - | - | - | - | - |
| Wax | 1.5 | 1.5 | 1.5 | 1.5 | 1.5 | 1.5 | 1.5 | 1.5 | 1.5 | 1.5 |
| Antioxidant 1 | 3.0 | 3.0 | 3.0 | 3.0 | 3.0 | 3.0 | 3.0 | 3.0 | 3.0 | 3.0 |
| Antioxidant 2 | 1.5 | 1.5 | 1.5 | 1.5 | 1.5 | 1.5 | 1.5 | 1.5 | 1.5 | 1.5 |
| Stearic acid | 1.5 | 1.5 | 2.0 | 2.0 | 1.5 | 1.5 | 2.0 | 2.0 | 1.5 | 2.0 |
| Zinc oxide | 2.0 | 2.0 | 3.0 | 3.0 | 2.0 | 2.0 | 3.0 | 3.0 | 2.0 | 3.0 |
| Sulfur | 2.3 | 2.3 | 1.0 | 1.8 | 2.3 | 2.3 | 2.0 | 2.0 | 2.3 | 1.5 |
| Vulcanization accelerator 1 | 2.0 | 2.0 | 0.4 | 0.4 | 1.2 | 1.2 | 0.4 | 0.4 | 1.2 | 0.4 |
| Vulcanization accelerator 2 | - | - | 1.5 | 1.5 | - | - | 1.5 | 1.5 | - | 1.5 |
| Vulcanization accelerator 3 | 0.2 | 0.2 | - | - | 0.2 | 0.2 | - | - | 0.2 | - |
| **Physical property** | | | | | | | | | | |
| 70°C E*$_B$ | 10.0 | 10.6 | 3.1 | 5.0 | 8.5 | 7.9 | 6.5 | 5.4 | 8.2 | 4.0 |

Table 2

| | Compounding | | | | | | |
|---|---|---|---|---|---|---|---|
| | a | b | c | d | e | f | g |
| **Compounding for sidewall (parts by mass)** | | | | | | | |
| NR | 35 | 45 | 45 | 35 | 35 | 35 | 45 |
| SBR | - | - | - | - | - | - | - |
| BR1 | - | - | - | - | - | - | - |
| BR2 | 65 | 55 | 55 | 65 | 65 | 65 | 55 |
| CB1 | - | - | - | - | - | - | - |
| CB2 | 45 | 70 | 65 | 50 | 40 | 55 | 60 |
| Oil | 10 | 6.0 | 6.0 | 5.0 | 25 | 10 | 7.0 |
| Resin component | 3.0 | 3.0 | 3.0 | 3.0 | 3.0 | 3.0 | 3.0 |
| Wax | 1.0 | 1.0 | 1.0 | 1.0 | 1.0 | 1.0 | 1.0 |
| Antioxidant 1 | 3.0 | 3.0 | 3.0 | 3.0 | 3.0 | 3.0 | 3.0 |
| Antioxidant 2 | 0.5 | 0.5 | 0.5 | 0.5 | 0.5 | 0.5 | 0.5 |
| Stearic acid | 2.5 | 2.5 | 2.5 | 2.5 | 2.5 | 2.5 | 2.5 |
| Zinc oxide | 3.0 | 3.0 | 3.0 | 3.0 | 3.0 | 3.0 | 3.0 |
| Sulfur | 1.5 | 1.5 | 1.5 | 1.5 | 1.2 | 1.5 | 1.5 |
| Vulcanization accelerator 1 | 0.7 | 1.0 | 1.0 | 0.7 | 0.7 | 0.7 | 1.0 |
| Vulcanization accelerator 2 | - | - | - | - | - | - | - |
| Vulcanization accelerator 3 | - | - | - | - | - | - | - |
| **Physical property** | | | | | | | |
| 70°C E*s | 3.5 | 6.7 | 5.7 | 4.0 | 2.8 | 4.2 | 5.2 |

Table 3

| | Example | | | | | | | | | | | Comparative example | | |
|---|---|---|---|---|---|---|---|---|---|---|---|---|---|---|
| | 1 | 2 | 3 | 4 | 5 | 6 | 7 | 8 | 9 | 10 | 11 | 1 | 2 | 3 |
| Compounding for base tread | A | B | C | D | D | E | F | G | H | D | D | A | B | B |
| Compounding for sidewall | a | b | b | b | c | d | d | d | d | e | f | e | e | a |
| $|70°C\ E^*_B - 70°C\ E^*_S|$ | 6.5 | 3.9 | 3.6 | 1.7 | 0.7 | 4.5 | 3.9 | 2.5 | 1.4 | 2.2 | 0.8 | 7.2 | 7.8 | 7.1 |
| $|70°C\ E^*_B - 70°C\ E^*_S|/|A_2 - A_1|$ [Inequality (2)] | 0.65 | 0.39 | 0.36 | 0.17 | 0.07 | 0.45 | 0.39 | 0.25 | 0.14 | 0.22 | 0.08 | 0.72 | 0.78 | 0.71 |
| Durability index | 108 | 135 | 144 | 147 | 152 | 130 | 138 | 154 | 166 | 163 | 172 | 100 | 99 | 100 |

Table 4

| | Example | | | | | | | Comparative example | | |
|---|---|---|---|---|---|---|---|---|---|---|
| | 12 | 13 | 14 | 15 | 16 | 17 | 18 | 4 | 5 | 6 |
| Compounding for base tread | A | I | I | C | J | G | C | A | G | C |
| Compounding for sidewall | b | c | b | 9 | g | 9 | e | c | e | b |
| $|70°C\ E^*_B - 70°C\ E^*_S|$ | 3.3 | 2.5 | 1.6 | 2.1 | 1.2 | 1.3 | 0.3 | 4.3 | 3.7 | 3.6 |
| $|70°C\ E^*_B - 70°C\ E^*_S|/|A_2 - A_1|$ [Inequality (2)] | 0.66 | 0.50 | 0.32 | 0.42 | 0.24 | 0.26 | 0.06 | 0.86 | 0.74 | 0.72 |
| Durability index | 111 | 122 | 127 | 120 | 125 | 134 | 152 | 98 | 100 | 95 |

REFERENCE SIGNS LIST

1. Cap tread
2. Base tread
3. Carcass
4. Belt
5. Band
6. Reinforcing layer
CL. Tire center line
W. Tire width direction
C. Tire circumferential direction
P. Tire maximum width position
$A_1$. Angle at which extending direction of carcass cord is inclined from tire circumferential direction at position on tire center line
$A_2$. Angle at which extending direction of carcass cord is inclined from tire circumferential direction at tire maximum width position
$A_{RF}$. Angle at which extending direction of reinforcing layer cord is inclined from tire circumferential direction

**Claims**

1. A pneumatic tire comprising a tread, a carcass, at least one reinforcing layer arranged on an outer side of the carcass in a tire radial direction, and a sidewall,

   the tread comprising a cap tread including a ground-contacting surface, and a base tread on an inner side of the cap tread in a tire radial direction,
   wherein the carcass is composed of at least one carcass ply comprising a plurality of carcass cords and a topping rubber covering the carcass cords,
   wherein the reinforcing layer is composed of at least one reinforcing layer ply comprising a plurality of reinforcing layer cords and a topping rubber covering the reinforcing layer cords,
   wherein $A_1$ represents an angle, in degrees, at which an extending direction of carcass cord of any of the carcass plies is inclined from a tire circumferential direction at a position on a tire center line, and $A_2$ represents an angle, in degrees, at which an extending direction of carcass cord of the carcass ply is inclined from the tire circumferential direction at a tire maximum width position,
   wherein a rubber composition constituting the base tread and a rubber composition constituting the sidewall are composed of different rubber compositions, and
   wherein $A_1$, $A_2$, 70°C $E^*_B$, 70°C $E^*_S$, and K satisfy the following inequalities (1) and (2):

$$(1) \ |A_2 - A_1| > 0$$

$$(2) \ |70°C \ E^*_B - 70°C \ E^*_S| < |A_2 - A_1| \times K$$

   (provided that K is 0.70, preferably 0.60),
   where 70°C $E^*_S$ represents a complex elastic modulus, in MPa, at 70°C of the rubber composition constituting the base tread, 70°C $E^*_S$ represents a complex elastic modulus, in MPa, at 70°C of the rubber composition constituting the sidewall, and K represents a constant.

2. The pneumatic tire of claim 1, wherein, in the inequality (2), the constant K is 0.50, preferably 0.40, more preferably 0.30, further preferably 0.20, further preferably 0.10.

3. The pneumatic tire of claim 1 or 2, wherein the rubber composition constituting the base tread comprises a rubber component, and wherein the rubber component comprises an isoprene-based rubber.

4. The pneumatic tire of any one of claims 1 to 3, wherein the rubber composition constituting the base tread comprises a rubber component, and wherein the rubber component comprises a styrene-butadiene rubber or a butadiene rubber.

5. The pneumatic tire of any one of claims 1 to 4, wherein the rubber composition constituting the sidewall comprises a rubber component, and wherein the rubber component comprises an isoprene-based rubber.

6. The pneumatic tire of any one of claims 1 to 5, wherein the rubber composition constituting the sidewall comprises resin.

7. The pneumatic tire of any one of claims 1 to 6, wherein $A_1$ and $A_{RF}$ are different, where, in at least any of the reinforcing layer plies, $A_{RF}$ represents an angle, in degrees, at which an extending direction of reinforcing layer cord of the reinforcing layer ply is inclined from a tire circumferential direction.

8. The pneumatic tire of claim 7, wherein the inclination direction of $A_{RF}$ from the tire circumferential direction is opposite to the inclination direction of $A_1$ from the tire circumferential direction.

9. The pneumatic tire of claim 7 or 8, wherein the reinforcing layer comprising the reinforcing layer ply in which the angle at which the extending direction of reinforcing layer cord is inclined from the tire circumferential direction is $A_{RF}$ (°) is composed of one reinforcing layer ply.

10. The pneumatic tire of any one of claims 7 to 9, wherein the reinforcing layer ply in which the angle at which the extending direction of reinforcing layer cord is inclined from the tire circumferential direction is $A_{RF}$ (°) is a belt ply.

**11.** The pneumatic tire of any one of claims 1 to 10, wherein the at least one reinforcing layer consists of a belt.

**12.** The pneumatic tire of any one of claims 1 to 11, wherein the carcass is composed of one carcass ply.

**13.** The pneumatic tire of any one of claims 1 to 12, wherein $A_2$ is +70° or higher and +90° or lower, preferably +75° or higher and +85° or lower, more preferably +80° or higher and +85° or lower, or -70° or lower and higher than -90°, preferably -75° or lower and -85° or higher, more preferably -80° or lower and -85° or higher.

**14.** The pneumatic tire of any one of claims 1 to 13, wherein the complex elastic modulus, 70°C E*s, at 70°C of the rubber composition constituting the base tread is 7.0 or less, preferably 6.5 or less.

**15.** The pneumatic tire of any one of claims 1 to 14, wherein the complex elastic modulus, 70°C E*$_S$, at 70°C of the rubber composition constituting the sidewall is 6.5 or less.

# FIG. 1

# FIG.2

# FIG.3

# FIG.4

Europäisches
Patentamt
European
Patent Office
Office européen
des brevets

# EUROPEAN SEARCH REPORT

**Application Number**

EP 25 20 7655

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 676 808 B1 (SUMITOMO RUBBER IND [JP]) 4 November 2015 (2015-11-04) | 1,3-7, 10,12-15 | INV. B60C9/07 |
| Y | * paragraphs [0019] - [0022]; claims; figures * | 1,2,7-13 | B60C9/17 B60C11/00 |
| Y | US 3 327 753 A (LOUIS TRAVERS GEORGES) 27 June 1967 (1967-06-27) * claims; figures * | 1,2,7-9, 12,13 | |
| Y | DE 10 2022 200359 A1 (CONTINENTAL REIFEN DEUTSCHLAND GMBH [DE]) 20 July 2023 (2023-07-20) * claims; figures * | 1,2,7, 10-13 | |
| Y | EP 4 212 356 A1 (CONTINENTAL REIFEN DEUTSCHLAND GMBH [DE]) 19 July 2023 (2023-07-19) * paragraphs [0053], [0055]; claims; figures * | 1,2, 10-13 | |
| Y | US 2019/160873 A1 (MATSUDA JUN [JP] ET AL) 30 May 2019 (2019-05-30) * paragraphs [0027], [0030]; claims; figures * | 1,2,7-9, 11-13 | **TECHNICAL FIELDS SEARCHED (IPC)** B60C |
| Y | JP H03 292202 A (SUMITOMO RUBBER IND) 24 December 1991 (1991-12-24) * claims; figures * | 1,2,7-13 | |

The present search report has been drawn up for all claims

| Place of search | Date of completion of the search | Examiner |
|---|---|---|
| Munich | 24 March 2026 | Thanbichler, Peter |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 25 20 7655

This annex lists the patent family members relating to the patent documents cited in the above-mentioned European search report.
The members are as contained in the European Patent Office EDP file on
The European Patent Office is in no way liable for these particulars which are merely given for the purpose of information.

24-03-2026

| Patent document cited in search report | | | Publication date | Patent family member(s) | | | Publication date |
|---|---|---|---|---|---|---|---|
| EP 2676808 | B1 | | 04-11-2015 | EP | 2676808 | A1 | 25-12-2013 |
| | | | | JP | 5687246 | B2 | 18-03-2015 |
| | | | | JP | 2014004844 | A | 16-01-2014 |
| US 3327753 | A | | 27-06-1967 | AT | 265883 | B | 25-10-1968 |
| | | | | BE | 663874 | A | 16-11-1965 |
| | | | | CH | 429475 | A | 31-01-1967 |
| | | | | DE | 1505112 | B1 | 21-09-1972 |
| | | | | ES | 312942 | A1 | 01-10-1965 |
| | | | | FR | 1413102 | A | 08-10-1965 |
| | | | | GB | 1102547 | A | 07-02-1968 |
| | | | | GB | 1102548 | A | 07-02-1968 |
| | | | | IL | 23455 | A | 29-01-1969 |
| | | | | JP | S5510402 | B1 | 15-03-1980 |
| | | | | LU | 48564 | A1 | 10-11-1965 |
| | | | | NL | 131398 | C | 24-03-2026 |
| | | | | NL | 6506196 | A | 15-11-1965 |
| | | | | NO | 116747 | B | 12-05-1969 |
| | | | | SE | 316094 | B | 13-10-1969 |
| | | | | US | 3327753 | A | 27-06-1967 |
| DE 102022200359 | A1 | | 20-07-2023 | DE | 102022200359 | A1 | 20-07-2023 |
| | | | | EP | 4463328 | A1 | 20-11-2024 |
| | | | | WO | 2023134821 | A1 | 20-07-2023 |
| EP 4212356 | A1 | | 19-07-2023 | DE | 102022200384 | A1 | 20-07-2023 |
| | | | | EP | 4212356 | A1 | 19-07-2023 |
| US 2019160873 | A1 | | 30-05-2019 | CN | 109070640 | A | 21-12-2018 |
| | | | | DE | 112017002418 | T5 | 24-01-2019 |
| | | | | JP | 6245304 | B2 | 13-12-2017 |
| | | | | JP | 2017202753 | A | 16-11-2017 |
| | | | | US | 2019160873 | A1 | 30-05-2019 |
| | | | | WO | 2017195890 | A1 | 16-11-2017 |
| JP H03292202 | A | | 24-12-1991 | NONE | | | |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2023084469 A
- WO 2021123530 A
- EP 3427975 A
- JP 6856781 B
- EP 3173251 A
- JP 2009002594 A

**Non-patent literature cited in the description**

- *Rubber Chemistry and Technology*, 2012, vol. 85 (3), 408-449, 438, 440, 442
- A comparison of surface morphology and chemistry of pyrolytic carbon blacks with commercial carbon blacks. *Powder Technology*, 2005, vol. 160, 190-193
- *Akita Prefectural University Web Journal B*, 2019, vol. 6, 216-222